# EUROPEAN PATENT SPECIFICATION

(11) **EP 4 309 960 B1**
(45) Date of publication and mention of the grant of the patent: **08.04.2026**
(21) Application number: 21930620.6
(22) Date of filing: 19.03.2021
(51) Int. Cl.: B62D 5/04, H02J 7/34, H02J 1/08, B60R 16/033

(54) **AUXILIARY POWER SOURCE UNIT, METHOD FOR CONTROLLING AUXILIARY POWER SOURCE UNIT, AND STEERING DEVICE**
HILFSSTROMQUELLENEINHEIT, VERFAHREN ZUR STEUERUNG DER HILFSSTROMQUELLENEINHEIT UND LENKVORRICHTUNG
UNITÉ DE SOURCE D'ALIMENTATION AUXILIAIRE, PROCÉDÉ DE COMMANDE D'UNITÉ DE SOURCE D'ALIMENTATION AUXILIAIRE ET DISPOSITIF DE DIRECTION

(43) Date of publication of application: 24.01.2024
(73) Proprietor: JTEKT Corporation, Kariya-shi, Aichi-ken, 448-8652 (JP)
(72) Inventor: TOTOUMI Tomonori, Kariya-shi, Aichi 448-8652 (JP); MIO Takumi, Kariya-shi, Aichi 448-8652 (JP); SATO Fumihiko, Kariya-shi, Aichi 448-8652 (JP); SHINODA Satoshi, Kariya-shi, Aichi 448-8652 (JP); NITTA Hiroki, Kariya-shi, Aichi 448-8652 (JP); OTA Kouhei, Kariya-shi, Aichi 448-8652 (JP)
(74) Representative: Winter, Brandl - Partnerschaft mbB
(86) International application number: PCT/JP2021/011496
(87) International publication number: WO 2022/195879

(56) References cited:
- JP-A- 2004 276 833
- JP-A- 2004 345 413
- JP-A- 2020 108 286

## Description

### TECHNICAL FIELD

The present disclosure relates to auxiliary power supply units, methods for controlling an auxiliary power supply unit, and steering systems.

### BACKGROUND ART

Conventionally, there is a vehicle steering system having a redundant drive system from the viewpoint of ensuring safety, like the vehicle steering system in, for example, Patent Document 1. The vehicle steering system in this document includes two steering motors that generate a steering force, two control units that control the corresponding steering motors, and two power supplies. Each control unit normally drives a corresponding one of the steering motors based on the power from one of the two power supplies. On the other hand, when an abnormality occurs in one of the two power supplies, each control unit drives a corresponding one of the steering motors based on the power from the other power supply. Accordingly, steered wheels can be continuously steered by the two steering motors even if an abnormality occurs in one of the power supplies.

### Related Art Documents

### Patent Documents

Patent Document 1: Japanese Unexamined Patent Application Publication No. 2004-276833 (JP 2004-276833 A)

Furthermore, document JP 2020 108286 A describes an auxiliary power supply unit that supplies power from an external power supply to a motor including a power supply system, the auxiliary power supply unit comprising: an auxiliary power supply device located at an intermediate position on a power supply path that supplies power from the external power supply to the motor; and a power supply line group forming part of the power supply path, the power supply line group connecting the auxiliary power supply device to the motor, wherein the auxiliary power supply device includes: an auxiliary power supply provided on the power supply path to assist with power supply from the external power supply to the motor, and a switching circuit configured to switch a connection state of the auxiliary power supply to the power supply path, the connection state of the auxiliary power supply includes a boost state in which the auxiliary power supply is connected in series with the external power supply between the external power supply and the motor, the power supply line group includes a power supply line connected to the power supply system, and the upstream end of the power supply line is connected to the power supply path at a position downstream of the auxiliary power supply,

### SUMMARY OF THE INVENTION

### Problem to be Solved by the Invention

For example, when dry steering is performed, namely when a steering operation is performed while the vehicle is stationary, or when emergency steering is performed to avoid an obstacle while the vehicle is traveling, large power needs to be temporarily supplied from a power supply to the steering motors in order to generate a large steering force. In order to meet such large power needs, a power supply with a large capacity must be adopted, which leads to, for example, an increase in size of the power supply.

This problem does not necessarily occur only when power is supplied to a motor that is used as a driving source for a steering system. Even when power is supplied to any power supply target such as a motor that is used for a different purpose, the same problem occurs as long as increased power is temporarily required.

### Means for Solving the Problem

An auxiliary power supply unit according to the present invention is defined by the features of each of independent claims 1 and 2.

A method for controlling an auxiliary power supply unit according to the present invention is defined by the features of each of independent claims 8 and 9.

A steering system according to the present invention is defined by the features of independent claim 10. The dependent claims are directed to preferred embodiments of the invention.

### BRIEF DESCRIPTION OF THE DRAWINGS

[FIG. 1] FIG. 1 is a diagram showing a schematic configuration of a steering system having an auxiliary power supply unit according to a first embodiment.
[FIG. 2] FIG. 2 is a block diagram showing an electrical configuration of the steering system of FIG. 1.
[FIG. 3] FIG. 3 is a block diagram showing an electrical configuration of the auxiliary power supply unit of FIG. 2.
[FIG. 4] FIG. 4 is a flowchart of a process of determining a connection state of an auxiliary power supply by an auxiliary power supply control unit of the auxiliary power supply unit of FIG. 2.
[FIG. 5] FIG. 5 is an illustration of power supply when the connection state of the auxiliary power supply in the auxiliary power supply unit of FIG. 2 is a charging state.
[FIG. 6] FIG. 6 is an illustration of power supply when the connection state of the auxiliary power supply in the auxiliary power supply unit of FIG. 2 is a backup state.
[FIG. 7] FIG. 7 is an illustration of power supply when the connection state of the auxiliary power supply in the auxiliary power supply unit of FIG. 2 is a boost state.
[FIG. 8] FIG. 8 is a block diagram showing an electrical configuration of an auxiliary power supply unit according to a second embodiment.
[FIG. 9] FIG. 9 is an illustration of power supply when the connection state of both a first auxiliary power supply and a second auxiliary power supply in the auxiliary power supply unit of FIG. 8 is the charging state.
[FIG. 10] FIG. 10 is an illustration of power supply when the connection state of the first auxiliary power supply in the auxiliary power supply unit of FIG. 8 is the backup state and the connection state of the second auxiliary power supply in the auxiliary power supply unit of FIG. 8 is the charging state.
[FIG. 11] FIG. 11 is an illustration of power supply when the connection state of the first auxiliary power supply in the auxiliary power supply unit of FIG. 8 is the charging state and the connection state of the second auxiliary power supply in the auxiliary power supply unit of FIG. 8 is the backup state.
[FIG. 12] FIG. 12 is an illustration of power supply when the connection state of both the first auxiliary power supply and the second auxiliary power supply in the auxiliary power supply unit of FIG. 8 is the boost state.

### MODES FOR CARRYING OUT THE INVENTION

### (First Embodiment)

A first embodiment of an auxiliary power supply unit, a method for controlling an auxiliary power supply unit, and a steering system will be described below with reference to the drawings. An auxiliary power supply unit 1 of the present embodiment supplies power to a steering system 2 mounted on a vehicle.

### (Overall Configuration)

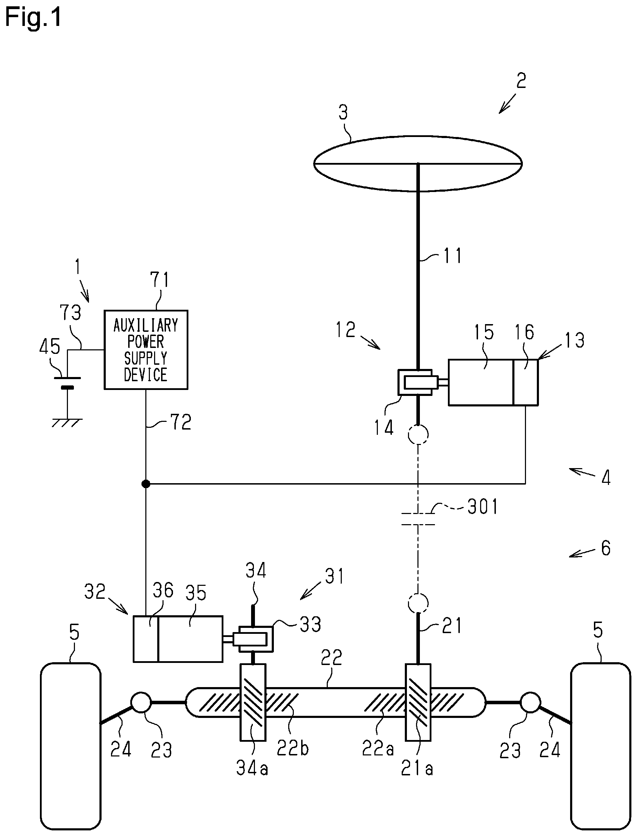

As shown in FIG. 1, the steering system 2 is a steer-by-wire steering system. The steering system 2 includes: a reaction force unit 4 that is operated by a driver via a steering wheel 3; and a steering unit 6 that steers steered wheels 5 according to the operation of the reaction force unit 4 by the driver. The steering system 2 has a structure in which the power transmission path between the reaction force unit 4 and the steering unit 6 is always mechanically disconnected.

The reaction force unit 4 includes: a steering shaft 11 to which the steering wheel 3 is connected; and a reaction force actuator 12 that applies an operation reaction force against a steering operation to the steering wheel 3.

The reaction force actuator 12 includes a reaction motor unit 13 and a reaction force-side reduction gear 14. The reaction motor unit 13 includes a reaction motor 15 and a reaction force control device 16 that controls the reaction motor 15. The reaction motor 15 is connected to the steering shaft 11 via the reaction force-side reduction gear 14. Motor torque of the reaction motor 15 is thus applied to the steering wheel 3 via the steering shaft 11.

The steering unit 6 includes a first pinion shaft 21 and a rack shaft 22 connected to the first pinion shaft 21. The first pinion shaft 21 is disposed so as to cross the rack shaft 22 at a predetermined crossing angle. The first pinion shaft 21 has first pinion teeth 21a, and the rack shaft 22 has first rack teeth 22a. The first pinion teeth 21a mesh with the first rack teeth 22a, and the first pinion shaft 21 is thus connected to the rack shaft 22. That is, the first pinion shaft 21 and the rack shaft 22 form a first rack and pinion mechanism. The first pinion shaft 21 therefore rotates according to the reciprocating motion of the rack shaft 22. Tie rods 24 are connected to both ends of the rack shaft 22 via ball joints 23. Distal ends of the tie rods 24 are connected to knuckles, not shown, with the steered wheels 5 mounted thereon.

The steering unit 6 further includes a steering actuator 31 that applies a steering force for steering the steered wheels 5. The steering actuator 31 includes a steering motor unit 32, a steering-side reduction gear 33, and a second pinion shaft 34. The steering motor unit 32 includes a steering motor 35 and a steering control device 36 that controls the steering motor 35. The steering motor 35 is connected to the second pinion shaft 34 via the steering-side reduction gear 33. The second pinion shaft 34 has second pinion teeth 34a, and the rack shaft 22 has second rack teeth 22b. The second pinion teeth 34a mesh with the second rack teeth 22b, and the second pinion shaft 34 is thus connected to the rack shaft 22. That is, the second pinion shaft 34 and the rack shaft 22 form a second rack and pinion mechanism.

Motor torque of the steering motor 35 is transmitted to the second pinion shaft 34 via the steering-side reduction gear 33. The torque transmitted to the second pinion shaft 34 is converted to the reciprocating motion of the rack shaft 22 via the second rack and pinion mechanism. The steering actuator 31 thus applies a steering force to the steering unit 6.

In the steering system 2 configured as described above, a steering force is applied from the steering actuator 31 according to the steering operation by the driver. As a result, the rack shaft 22 reciprocates and the steered angle of the steered wheels 5 is changed. At this time, the reaction force actuator 12 applies the operation reaction force against the steering operation of the driver to the steering wheel 3.

Next, the electrical configuration of the steering system 2 will be described.

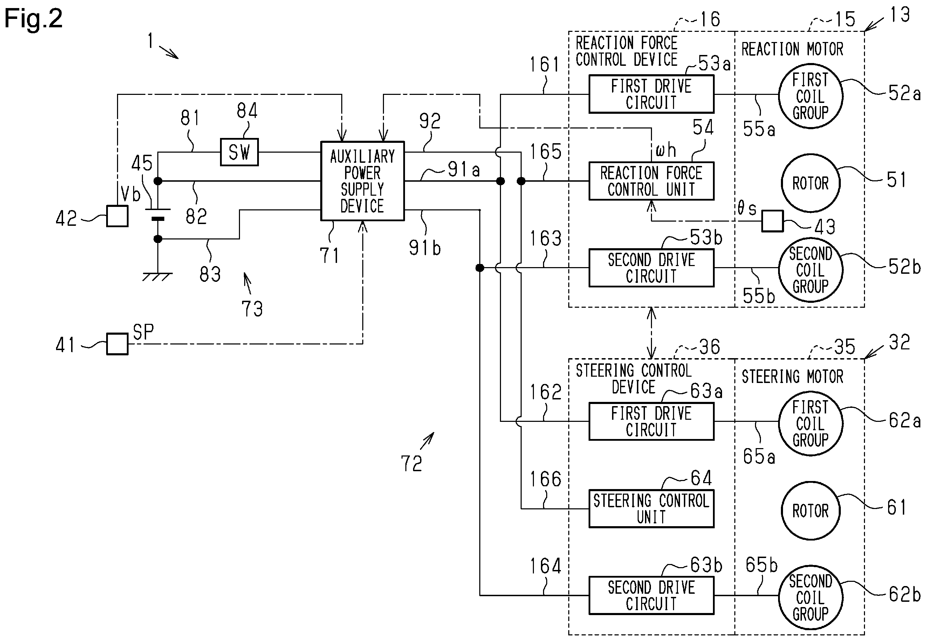

As shown in FIGS. 1 and 2, the reaction force control device 16 and the steering control device 36 are connected so that they can communicate with each other. Detection results from various sensors are input to the reaction force control device 16 and the steering control device 36. The various sensors include, for example, a vehicle speed sensor 41, a voltage sensor 42, and a rotation angle sensor 43 of the reaction motor 15, which will be described later. The various sensors further include, for example, a rotation angle sensor and a torque sensor, not shown, of the steering motor 35.

The vehicle speed sensor 41 detects a vehicle speed SP that is the travel speed of the vehicle. The voltage sensor 42 detects a power supply voltage Vb from an external power supply 45. The external power supply 45 is a secondary battery mounted on the vehicle. The rotation angle sensor 43 of the reaction motor 15 detects a rotation angle θs of a rotating shaft of the reaction motor 15 as a relative angle within the range of 360°. A rotation angle sensor of the steering motor 35 detects a rotation angle of a rotating shaft of the steering motor 35 as a relative angle. The torque sensor detects steering torque applied to the steering shaft 11.

The reaction force control device 16 calculates a reaction force controlled variable that is a target value of the operation reaction force, based on the detection results from the various sensors. The reaction force control device 16 controls power supply to the reaction motor 15 based on the reaction force controlled variable. The steering control device 36 calculates a steering controlled variable that is a target value of the steering force, based on the detection results from the various sensors. The steering control device 36 controls power supply to the steering motor 35 based on the steering controlled variable. The power supplied to the reaction motor 15 and the power supplied to the steering motor 35 are supplied from the external power supply 45 via the auxiliary power supply unit 1.

Next, the configurations of the auxiliary power supply unit 1 and the motor units 13, 32 that are power supply targets to which power from the auxiliary power supply unit 1 is to be supplied will be described.

### (Reaction Motor Unit 13)

As shown in FIG. 2, the reaction motor 15 of the reaction motor unit 13 includes a rotor 51 and a first coil group 52a and a second coil group 52b that are wound around a stator, not shown. As an example, the reaction motor 15 is a three-phase surface permanent magnet synchronous motor. Each of the first coil group 52a and the second coil group 52b has coils of three phases, namely U, V, and W-phases. The reaction force control device 16 includes a first drive circuit 53a, a second drive circuit 53b, and a reaction force control unit 54 that controls the first drive circuit 53a and the second drive circuit 53b. The reaction force control unit 54 includes a central processing unit (CPU) and a memory, not shown. Various controls by the reaction force control unit 54 are performed by the CPU executing programs stored in the memory at a predetermined calculation cycle. As an example, the first drive circuit 53a and the second drive circuit 53b are typical PWM inverters having a plurality of switching elements.

The first coil group 52a is connected to the first drive circuit 53a via a first connection line 55a. The second coil group 52b is connected to the second drive circuit 53b via a second connection line 55b. Power is thus independently supplied to each of the first coil group 52a and the second coil group 52b. That is, the reaction motor unit 13 has a plurality of power supply systems. As an example, one half of the operation reaction force required to be generated by the reaction motor 15 is covered by the torque generated by the first coil group 52a, and the other half is covered by the torque generated by the second coil group 52b.

A first power supply system that supplies power to the first coil group 52a includes the first drive circuit 53a and the first connection line 55a. A second power supply system that supplies power to the second coil group 52b includes the second drive circuit 53b and the second connection line 55b. In FIG. 2, for convenience of description, the first connection lines 55a and the second connection lines 55b of the three phases are collectively illustrated as one first connection line 55a and one second connection line 55b.

The reaction force control unit 54 calculates a steering speed wh of the steering wheel 3 and outputs the calculated steering speed wh to the auxiliary power supply unit 1 in the course of calculating the reaction force controlled variable. Specifically, the rotation angle θs of the reaction motor 15 detected by the rotation angle sensor 43 is input to the reaction force control unit 54. For example, the reaction force control unit 54 counts the number of rotations of the reaction motor 15 from the steering center point, and calculates an integrated angle by integrating the rotation angle as using the steering center point as the origin. The steering center point is a steering angle θh when the steering wheel 3 is at the center of the steerable range. Subsequently, the reaction force control unit 54 calculates a steering angle θh by multiplying the integrated angle by a conversion factor based on the rotational speed ratio of the reaction force-side reduction gear 14. The steering speed wh is calculated by differentiating this steering angle θh.

### (Steering Motor Unit 32)

The steering motor unit 32 is configured similarly to the reaction motor unit 13. That is, the steering motor 35 includes a rotor 61 and a first coil group 62a and a second coil group 62b that are wound around a stator, not shown. The steering control device 36 includes a first drive circuit 63a, a second drive circuit 63b, and a steering control unit 64 that controls the first drive circuit 63a and the second drive circuit 63b. The first coil group 62a is connected to the first drive circuit 63a via a first connection line 65a, and the second coil group 62b is connected to the second drive circuit 63b via a second connection line 65b. That is, the steering motor unit 32 has a plurality of power supply systems.

A first power supply system that supplies power to the first coil group 62a includes the first drive circuit 63a and the first connection line 65a. A second power supply system that supplies power to the second coil group 62b includes the second drive circuit 63b and the second connection line 65b. In FIG. 2, for convenience of description, the first connection lines 65a and the second connection lines 65b of the three phases are collectively illustrated as one first connection line 65a and one second connection line 65b.

### (Auxiliary Power Supply Unit 1)

The auxiliary power supply unit 1 supplies power from the external power supply 45 to the motor units 13, 32. The auxiliary power supply unit 1 includes an auxiliary power supply device 71 and a downstream power supply line group 72.

The auxiliary power supply device 71 is located at an intermediate position on a power supply path for supplying power from the external power supply 45 to the motor units 13, 32. The power supply path includes: an upstream power supply line group 73 that connects the external power supply 45 to the auxiliary power supply device 71; the downstream power supply line group 72 that connects the auxiliary power supply device 71 to the motor units 13, 32; and an intermediate power supply line group 74 located inside the auxiliary power supply device 71 described later. That is, the downstream power supply line group 72 forms part of the power supply path. A configuration including the auxiliary power supply unit 1, the reaction force control device 16, and the steering control device 36 is sometimes referred to as "power supply system."

The upstream power supply line group 73 includes an upstream control line 81, an upstream drive line 82, and an upstream ground line 83. Each of the upstream drive line 82 and the upstream control line 81 connects the auxiliary power supply device 71 to a high potential terminal of the external power supply 45. A relay switch 84 that is turned on and off according to a start switch of the vehicle is located at an intermediate position on the upstream control line 81. As an example, the start switch is an ignition switch. The upstream ground line 83 connects the auxiliary power supply device 71 to the ground.

The downstream power supply line group 72 includes a first downstream drive line 91a, a second downstream drive line 91b, and a downstream control line 92. The first downstream drive line 91a connects the auxiliary power supply device 71 to the first power supply systems of both the reaction motor unit 13 and the steering motor unit 32. That is, the first downstream drive line 91a connects the auxiliary power supply device 71 to the first drive circuits 53a, 63a. The second downstream drive line 91b connects the auxiliary power supply device 71 to the second power supply systems of both the reaction motor unit 13 and the steering motor unit 32. That is, the second downstream drive line 91b connects the auxiliary power supply device 71 to the second drive circuits 53b, 63b. The downstream control line 92 connects the auxiliary power supply device 71 to the reaction force control unit 54 and the steering control unit 64 .

Detection results from various sensors are input to the auxiliary power supply device 71. The various sensors include the vehicle speed sensor 41 and the voltage sensor 42 . That is, the vehicle speed SP and the power supply voltage Vb are input to the auxiliary power supply device 71. The steering speed wh is input from the reaction force control unit 54 to the auxiliary power supply device 71. The auxiliary power supply device 71 supplies power to the motor units 13, 32 based on these state quantities.

Next, the configurations of the auxiliary power supply device 71 and the downstream power supply line group 72 will be described in detail.

### (Auxiliary Power Supply Device 71)

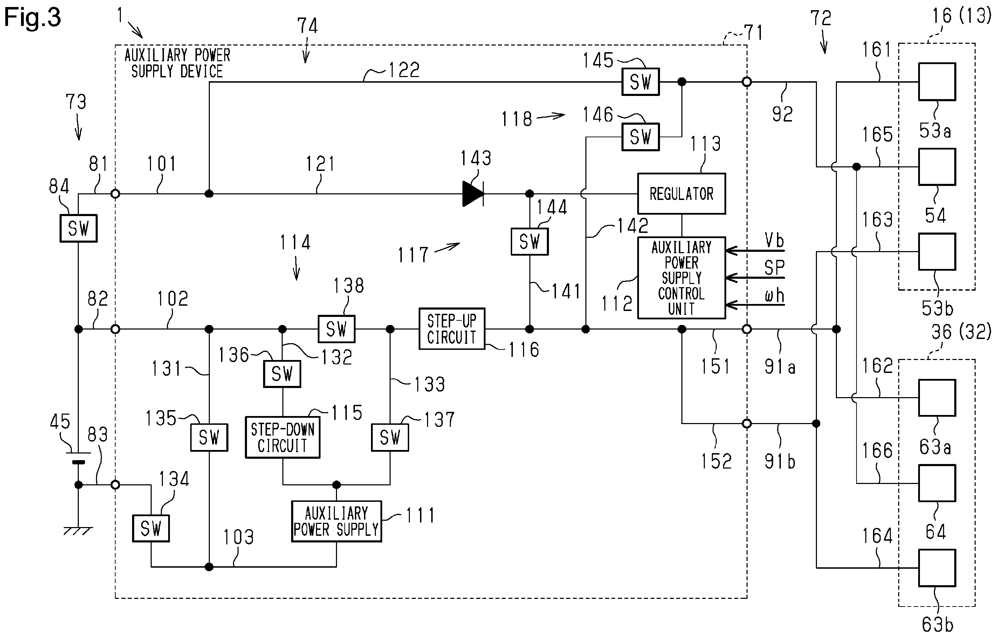

As shown in FIG. 3, the auxiliary power supply device 71 includes the intermediate power supply line group 74 that connects the upstream power supply line group 73 and the downstream power supply line group 72 to each other. The intermediate power supply line group 74 includes: an intermediate control line 101 connected to the upstream control line 81; an intermediate drive line 102 connected to the upstream drive line 82; and an intermediate ground line 103 connected to the upstream ground line 83. The auxiliary power supply device 71 further includes an auxiliary power supply 111, an auxiliary power supply control unit 112, a regulator 113, a switching circuit 114, a step-down circuit 115, a step-up circuit 116, an internal selection circuit 117, and an external selection circuit 118. These various circuits are connected to corresponding lines. In the following description, the side of the intermediate power supply line group 74 that is connected to the upstream power supply line group 73 is defined as the upstream side, and the opposite side is defined as the downstream side.

Specifically, the intermediate control line 101 has an internal intermediate control line 121 connected to the regulator 113 and an external intermediate control line 122 that branches off from the internal intermediate control line 121. The external intermediate control line 122 is connected to the downstream control line 92.

The regulator 113 adjusts the power supply voltage Vb supplied from the external power supply 45 to a preset control voltage. The auxiliary power supply control unit 112 is connected to the regulator 113.

The auxiliary power supply control unit 112 operates based on the voltage supplied from the regulator 113. The auxiliary power supply control unit 112 includes a central processing unit (CPU) and a memory, not shown. Various controls by the auxiliary power supply control unit 112 are performed by the CPU executing programs stored in the memory at a predetermined calculation cycle. The vehicle speed SP, the power supply voltage Vb, and the steering speed wh are input to the auxiliary power supply control unit 112. The auxiliary power supply control unit 112 controls various circuits including the switching circuit 114 in the auxiliary power supply device 71 based on these state quantities. That is, the auxiliary power supply control unit 112 corresponds to a switching control circuit. For convenience of description, lines indicating signals output from the auxiliary power supply control unit 112 are not shown. A specific control method will be described later.

The auxiliary power supply 111 and the switching circuit 114 are disposed between the intermediate drive line 102 and the intermediate ground line 103. The auxiliary power supply 111 assists with power supply from the external power supply 45 to the motor units 13, 32. The auxiliary power supply 111 is a capacitor having the same functions as a secondary battery. As an example, the auxiliary power supply 111 is a lithium-ion capacitor.

The switching circuit 114 is configured to switch the connection state of the auxiliary power supply 111 to the power supply path, that is, to the intermediate drive line 102 and the intermediate ground line 103. The connection state of the auxiliary power supply 111 includes a charging state, a backup state, and a boost state. The charging state is a state in which the auxiliary power supply 111 is connected in parallel with the motor units 13, 32 to the external power supply 45. The backup state is a state in which the auxiliary power supply 111 is disconnected from the external power supply 45 and the auxiliary power supply 111 is connected to the motor units 13, 32. The boost state is a state in which the auxiliary power supply 111 is connected in series with the external power supply 45 between the external power supply 45 and the motor units 13, 32.

Specifically, the switching circuit 114 includes a boost line 131, a charge line 132, an output line 133, and first to fifth switches 134 to 138. One end of the boost line 131 is connected to the intermediate drive line 102, and the other end of the boost line 131 is connected to the intermediate ground line 103. One end of the charging line 132 is connected to the intermediate drive line 102 at a connection point located downstream of the connection point of the boost line 131, and the other end of the charge line 132 is connected to a high potential terminal of the auxiliary power supply 111. One end of the output line 133 is connected to the intermediate drive line 102 at a connection point located downstream of the connection point of the charge line 132, and the other end of the output line 133 is connected to the high potential terminal of the auxiliary power supply 111. A low potential terminal of the auxiliary power supply 111 is connected to the intermediate ground line 103 at a connection point located downstream of the connection point of the boost line 131.

The first switch 134 is provided on the intermediate ground line 103 so as to be located upstream of the connection point of the boost line 131. The second switch 135 is provided at an intermediate position on the boost line 131. The third switch 136 is provided at an intermediate position on the charge line 132. The fourth switch 137 is provided at an intermediate position on the output line 133. The fifth switch 138 is provided on the intermediate drive line 102 so as to be located between the connection point of the charge line 132 and the connection point of the output line 133.

Accordingly, the connection state of the auxiliary power supply 111 is the charging state when the third switch 136 and the fifth switch 138 are on and the first switch 134, the second switch 135, and the fourth switch 137 are off. The connection state of the auxiliary power supply 111 is the backup state when the first switch 134 and the fourth switch 137 are on and the second switch 135, the third switch 136, and the fifth switch 138 are off. The connection state of the auxiliary power supply 111 is the boost state when the second switch 135 and the fourth switch 137 are on and the first switch 134, the third switch 136, and the fifth switch 138 are off.

The step-down circuit 115 is provided on the charge line 132 so as to be located between the third switch 136 and the auxiliary power supply 111. As an example, the step-down circuit 115 is a DC-to-DC converter. The step-down circuit 115 is configured to change the ratio of an output voltage to an input voltage within a predetermined range by adjusting the on-off ratio of an internal switch. The step-down circuit 115 steps down the power supply voltage Vb received from the external power supply 45 to a preset charging output voltage and outputs this charging output voltage.

The step-up circuit 116 is provided on the intermediate drive line 102 so as to be located downstream of the connection point of the output line 133. As an example, the step-up circuit 116 is a DC-to-DC converter. The step-up circuit 116 is configured to change the ratio of an output voltage to an input voltage within a predetermined range by adjusting the on-off ratio of an internal switch. That is, the maximum value of the output voltage the step-up circuit 116 can output is determined by the magnitude of the input voltage. The step-up circuit 116 steps up the input voltage according to the connection state of the auxiliary power supply 111.

Specifically, when the connection state of the auxiliary power supply 111 is the charging state or the backup state, the auxiliary power supply control unit 112 steps up an input voltage to a preset normal output voltage and outputs this normal output voltage. When the connection state of the auxiliary power supply 111 is the boost state, the auxiliary power supply control unit 112 steps up the input voltage to a preset boost output voltage and outputs this boost output voltage. The boost output voltage is set in advance to such a magnitude that is higher than the normal output voltage and to which the input voltage cannot be stepped up by the step-up circuit 116 unless the input voltage is higher than the normal power supply voltage Vb.

The intermediate drive line 102 has an internal backup line 141 and an external backup line 142 that are connected downstream of the step-up circuit 116. The internal backup line 141 is connected to the regulator 113 via the internal intermediate control line 121. The external backup line 142 is connected to the external intermediate control line 122.

The internal selection circuit 117 is provided on both the internal backup line 141 and the internal intermediate control line 121. The internal selection circuit 117 includes a diode 143 and a backup switch 144. The diode 143 is provided on the internal intermediate control line 121 so as to be located downstream of the connection point of the external intermediate control line 122 and upstream of the connection point of the internal backup line 141. The diode 143 allows power to flow from the upstream side to the downstream side and restricts power flow from the downstream side to the upstream side. The backup switch 144 is provided at an intermediate position on the internal backup line 141. The backup switch 144 is controlled by the auxiliary power supply control unit 112 according to the connection state of the auxiliary power supply 111. Specifically, the backup switch 144 is off when the connection state of the auxiliary power supply 111 is the charging state or the boost state. The backup switch 144 is on when the connection state of the auxiliary power supply 111 is the backup state.

The external selection circuit 118 is provided on both the external backup line 142 and the external intermediate control line 122. The external selection circuit 118 includes selection switches 145, 146. The selection switch 145 is provided on the external intermediate control line 122 so as to be located upstream of the connection point of the external backup line 142. The selection switch 146 is provided at an intermediate position on the external backup line 142. The selection switches 145, 146 are controlled by the auxiliary power supply control unit 112 according to the connection state of the auxiliary power supply 111. Specifically, the selection switch 145 is on and the selection switch 146 is off when the connection state of the auxiliary power supply 111 is the charging state or the boost state. The selection switch 145 is off and the selection switch 146 is on when the connection state of the auxiliary power supply 111 is the backup state. That is, the selection switches 145, 146 are turned on and off complementarily to each other.

The intermediate drive line 102 branches into two at a position downstream of the connection point of the external backup line 142, that is, downstream of the step-up circuit 116. The intermediate drive line 102 therefore has a first intermediate drive line 151 and a second intermediate drive line 152. No circuit element for actively changing the voltage is provided on the first intermediate drive line 151 and the second intermediate drive line 152. The potential at the downstream end of the first intermediate drive line 151 and the potential at the downstream end of the second intermediate drive line 152 are substantially equal to each other. The first intermediate drive line 151 is connected to the first downstream drive line 91a, and the second intermediate drive line 152 is connected to the second downstream drive line 91b. In other words, the portion of the intermediate drive line 102 that is located between the step-up circuit 116 and each of the upstream ends of the first downstream drive line 91a and the second downstream drive line 91b has only a wire for sending power.

### (Downstream Power Supply Line Group 72)

The first downstream drive line 91a branches into two toward the downstream side. The first downstream drive line 91a therefore has two branch first downstream drive lines 161, 162. In other words, the branch first downstream drive lines 161, 162 are combined into one on the upstream side. The branch first downstream drive lines 161, 162 correspond to individual power supply lines. The downstream end of the branch first downstream drive line 161 is connected to the first drive circuit 53a of the reaction motor unit 13. The downstream end of the branch first downstream drive line 162 is connected to the first drive circuit 63a of the steering motor unit 32. The upstream end of the first downstream drive line 91a is connected to the first intermediate drive line 151 as described above. That is, each of the upstream ends of the branch first downstream drive lines 161, 162 is connected to the power supply path at a position downstream of the auxiliary power supply 111. Specifically, when the switching circuit 114 is in the boost state or the backup state, each of the upstream ends of the branch first downstream drive lines 161, 162 is located downstream of the auxiliary power supply 111. When the switching circuit 114 is in the charging state, each of the upstream ends of the branch first downstream drive lines 161, 162 is located downstream of the connection point of the charge line 132 on the intermediate drive line 102. Therefore, in the portion of the intermediate drive line 102 that is located downstream of the step-up circuit 116, power is supplied to the first drive circuits 53a, 63a only through the first intermediate drive line 151 and the first downstream drive line 91a without passing through other circuit elements.

The second downstream drive line 91b branches into two toward the downstream side. The second downstream drive line 91b therefore has two branch second downstream drive lines 163, 164. In other words, the branch second downstream drive lines 163, 164 are combined into one on the upstream side. The branch second downstream drive lines 163, 164 correspond to individual power supply lines. The downstream end of the branch second downstream drive line 163 is connected to the second drive circuit 53b of the reaction motor unit 13. The downstream end of the branch second downstream drive line 164 is connected to the second drive circuit 63b of the steering motor unit 32. The upstream end of the second downstream drive line 91b is connected to the second intermediate drive line 152 as described above. That is, each of the upstream ends of the branch second downstream drive lines 163, 164 is connected to the power supply path at a position downstream of the connection point of the auxiliary power supply 111. Specifically, when the switching circuit 114 is in the boost state or the backup state, each of the upstream ends of the branch second downstream drive lines 163, 164 is located downstream of the auxiliary power supply 111. When the switching circuit 114 is in the charging state, each of the upstream ends of the branch second downstream drive lines 163, 164 is located downstream of the connection point of the charge line 132 on the intermediate drive line 102. Therefore, in the portion of the intermediate drive line 102 that is located downstream of the step-up circuit 116, power is supplied to the second drive circuits 53b, 63b only through the second intermediate drive line 152 and the second downstream drive line 91b without passing through other circuit elements.

The downstream control line 92 branches into two toward the downstream side. The downstream control line 92 therefore has a reaction force control line 165 and a steering control line 166. In other words, the reaction force control line 165 and the steering control line 166 are combined into one on the upstream side. The downstream end of the reaction force control line 165 is connected to the reaction force control unit 54. The downstream end of the steering control line 166 is connected to the steering control unit 64. The upstream end of the downstream control line 92 is connected to the external intermediate control line 122.

### (Control by Auxiliary Power Supply Control Unit 112)

When the external power supply 45 is normal and a first condition or a second condition, namely a condition to supply large power to the motor units 13, 32, is satisfied, the auxiliary power supply control unit 112 controls the switching circuit 114 so that the connection state of the auxiliary power supply 111 becomes the boost state. As an example, the auxiliary power supply control unit 112 determines that the external power supply 45 is normal when the power supply voltage Vb from the external power supply 45 is equal to or higher than a normal voltage threshold Vth. The normal voltage threshold Vth is the power supply voltage Vb at which the external power supply 45 can be considered normal, and is set in advance. The large power refers to power that is larger than the maximum power that can be supplied by the external power supply 45 alone when the external power supply 45 is in a normal state.

The first condition includes that the vehicle speed SP is equal to or lower than a travel determination threshold SPth, and that the steering speed wh of the steering wheel 3 is equal to or higher than a steering execution determination threshold wth1. The travel determination threshold SPth is a threshold indicating that the vehicle is at a stop or traveling at an extremely low speed, and is set in advance. The steering execution determination threshold wth1 is an angular velocity indicating that the steering wheel 3 is rotating due to steering operation by the driver, and is set in advance.

The second condition includes that the steering speed wh of the steering wheel 3 is equal to or higher than a high speed steering determination threshold wth2. The high speed steering determination threshold wth2 is an angular velocity indicating that the steering wheel 3 is rotating at high speed, such as during emergency steering for avoiding an obstacle while the vehicle is traveling. The high speed steering determination threshold wth2 is set in advance to a value larger than the steering execution determination threshold wth1.

When the external power supply 45 is normal and neither the first condition nor the second condition is satisfied, the auxiliary power supply control unit 112 controls the switching circuit 114 so that the connection state of the auxiliary power supply 111 becomes the charging state. When the external power supply 45 is not normal, the auxiliary power supply control unit 112 controls the switching circuit 114 so that the connection state of the auxiliary power supply 111 becomes the backup state.

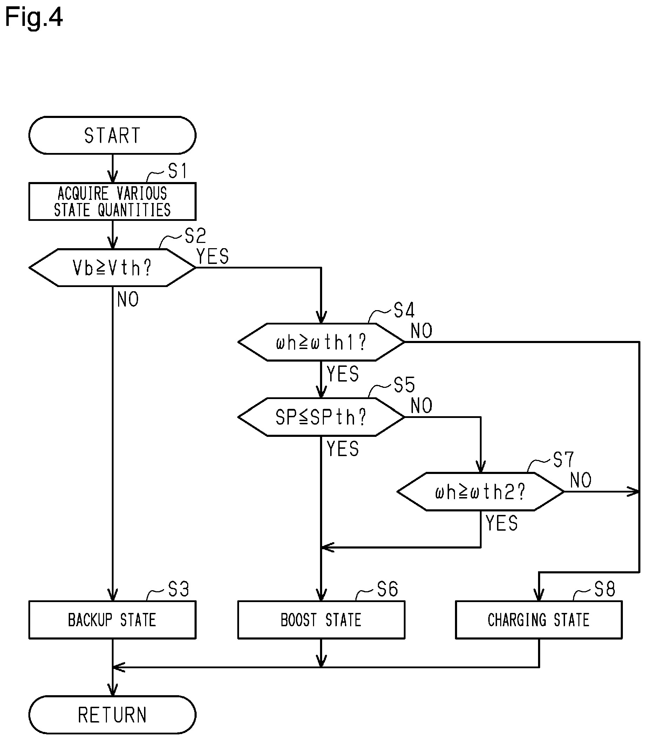

Next, a process of determining the connection state of the auxiliary power supply 111 by the auxiliary power supply control unit 112 will be described with reference to the flowchart of FIG. 4.

Specifically, after acquiring various state quantities (step S1), the auxiliary power supply control unit 112 determines whether the power supply voltage Vb is equal to or higher than the normal voltage threshold Vth (step S2). When the power supply voltage Vb is lower than the normal voltage threshold Vth (step S2: NO), the connection state of the auxiliary power supply 111 is set to the backup state (step S3).

On the other hand, when the power supply voltage Vb is equal to or higher than the normal voltage threshold Vth (step S2: YES), the auxiliary power supply control unit 112 determines whether the steering speed wh is equal to or higher than the steering execution determination threshold wth1 (step S4). When the steering speed wh is equal to or higher than the steering execution determination threshold wth1 (step S4: YES), it is determined whether the vehicle speed SP is equal to or lower than the travel determination threshold SPth (step S5). When the vehicle speed SP is equal to or lower than the travel determination threshold SPth (step S5: YES), the external power supply 45 is normal and the first condition is satisfied. Therefore, the connection state of the auxiliary power supply 111 is set to the boost state (step S6).

When the vehicle speed SP is higher than the travel determination threshold SPth (step S5: NO), the auxiliary power supply control unit 112 determines whether the steering speed wh is equal to or higher than the high speed steering determination threshold wth2 (step S7). When the steering speed wh is equal to or higher than the high speed steering determination threshold wth2 (step S7: YES), the external power supply 45 is normal and the second condition is satisfied. Therefore, the process proceeds to step S6, and the connection state of the auxiliary power supply 111 is set to the boost state.

On the other hand, when the steering speed wh is lower than the steering execution determination threshold wth1 (step S4: NO), or when the steering speed wh is lower than the high speed steering determination threshold wth2 (step S7: NO), the auxiliary power supply control unit 112 sets the connection state of the auxiliary power supply 111 to the charging state (step S8).

(How Power is Supplied to Reaction Motor Unit 13 and Steering Motor Unit 32)

Next, how power is supplied to the motor units 13, 32 will be described for each connection state of the auxiliary power supply 111.

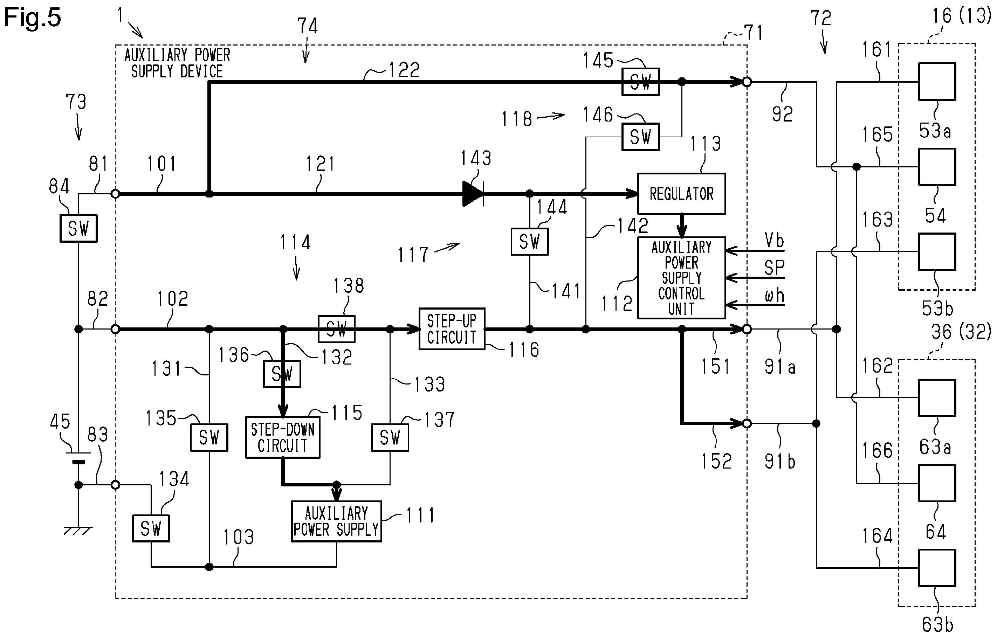

As shown in FIG. 5, when the connection state of the auxiliary power supply 111 is the charging state, the power supply voltage Vb from the external power supply 45 is input to the step-up circuit 116 via the intermediate drive line 102. A normal output voltage output from the step-up circuit 116 is output to the first downstream drive line 91a via the first intermediate drive line 151, and is also output to the second downstream drive line 91b via the second intermediate drive line 152. The normal output voltage output to the first downstream drive line 91a is supplied to the first drive circuit 53a of the reaction force control device 16 via the branch first downstream drive line 161, and is also supplied to the first drive circuit 63a of the steering control device 36 via the branch first downstream drive line 162. The normal output voltage output to the second downstream drive line 91b is supplied to the second drive circuit 53b of the reaction force control device 16 via the branch second downstream drive line 163, and is also supplied to the second drive circuit 63b of the steering control device 36 via the branch second downstream drive line 164.

As described above, in the charging state, the charging output voltage is supplied from the step-down circuit 115 to the auxiliary power supply 111 via the charge line 132. The auxiliary power supply 111 is thus kept in a charged state. When the auxiliary power supply 111 is in the charging state, the backup switch 144 is off. Therefore, power is supplied to the auxiliary power supply control unit 112 via the upstream control line 81 and the internal intermediate control line 121. Since the selection switch 145 is on and the selection switch 146 is off, the power supply voltage Vb supplied from the upstream control line 81 is output to the downstream control line 92 via the external intermediate control line 122. The power supply voltage Vb output to the downstream control line 92 is supplied to the reaction force control unit 54 via the reaction force control line 165, and is also supplied to the steering control unit 64 via the steering control line 166.

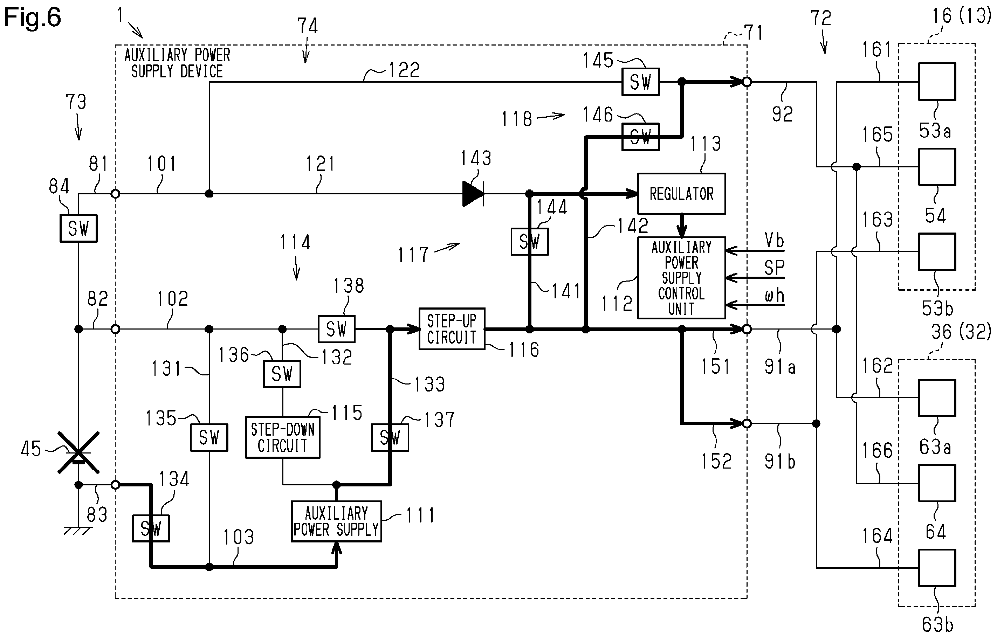

Next, as shown in FIG. 6, when an abnormality occurs in the external power supply 45, the connection state of the auxiliary power supply 111 becomes the backup state. In this case, no power is supplied from the external power supply 45 to the auxiliary power supply device 71. Instead of the power supply voltage Vb from the external power supply 45, the voltage from the auxiliary power supply 111 is input to the step-up circuit 116 via the output line 133. The step-up circuit 116 steps up the voltage from the auxiliary power supply 111 and outputs the normal output voltage. The output voltage thus output from the step-up circuit 116 is supplied to the first drive circuits 53a, 63a and the second drive circuits 53b, 63b in the same manner as that in the charging state. Therefore, even if power is no longer supplied from the external power supply 45, power can be temporarily supplied to the motor units 13, 32, so that application of the operation reaction force and steering of the steered wheels 5 can be continued.

As described above, in the backup state, the backup switch 144 is on. Therefore, power is supplied to the auxiliary power supply control unit 112 via the intermediate drive line 102 and the internal backup line 141. Since the selection switch 145 is off and the selection switch 146 is on, the voltage output from the intermediate drive line 102 is output to the downstream control line 92 via the external backup line 142 and the external intermediate control line 122. The power supply voltage Vb output to the downstream control line 92 is supplied to the reaction force control unit 54 and the steering control unit 64 in the same manner as that in the charging state.

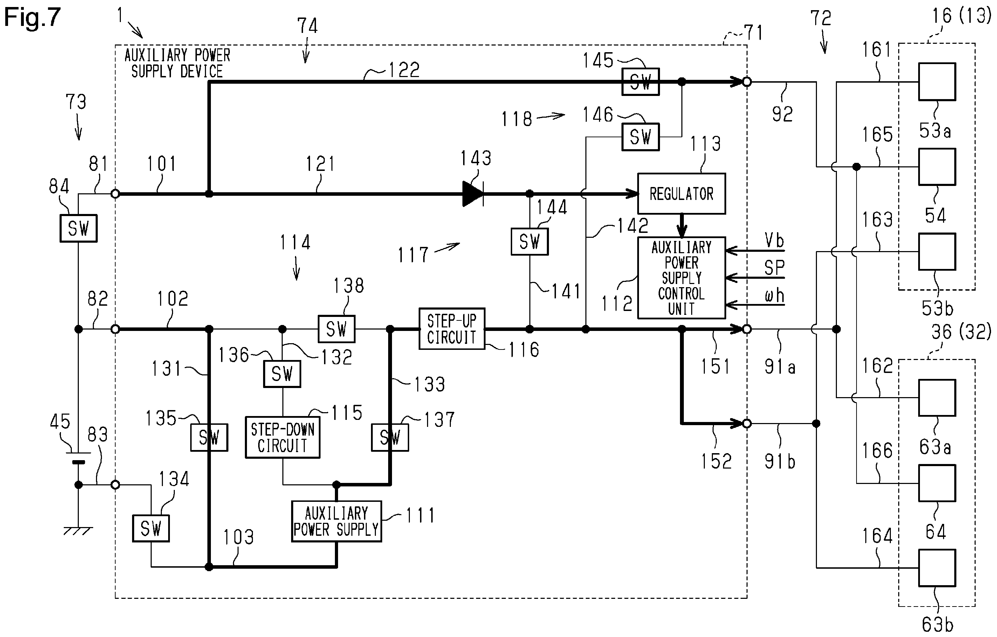

Next, as shown in FIG. 7, when the connection state of the auxiliary power supply 111 is the boost state, the power supply voltage Vb from the external power supply 45 is not input to the step-up circuit 116, but is input to the low potential terminal of the auxiliary power supply 111 via the intermediate drive line 102, the boost line 131, and the intermediate ground line 103. That is, the external power supply 45 is connected in series with the auxiliary power supply 111. A total voltage that is the sum of the power supply voltage Vb from the external power supply 45 and the voltage from the auxiliary power supply 111 is thus input to the step-up circuit 116. The step-up circuit 116 steps up this total voltage and outputs a boost output voltage that is higher than the normal output voltage. The output voltage thus output from the step-up circuit 116 is supplied to the first drive circuits 53a, 63a and the second drive circuits 53b, 63b in the same manner as that in the charging state. Large power can thus be supplied to the motor units 13, 32.

As described above, in the boost state, the backup switch 144 is off as in the charging state. When the auxiliary power supply 111 is in the boost state, the selection switch 145 is on and the selection switch 146 is off, as in the charging state. Therefore, power is supplied to the auxiliary power supply control unit 112, the reaction force control unit 54, and the steering control unit 64 in the same manner as in the charging state.

As described above, although the magnitude of the output voltage output from the step-up circuit 116 varies depending on the connection state of the auxiliary power supply 111, the voltages that are substantially equal to each other are supplied to the first drive circuits 53a, 63a and to the second drive circuits 53b, 63b. That is, since the substantially equal powers are supplied to the first coil group 52a and the second coil group 52b of the reaction motor 15, the reaction motor 15 is stably driven. Similarly, since the voltages that are substantially equal to each other are supplied to the first coil group 62a and the second coil group 62b of the steering motor 35, the steering motor 35 is stably driven.

Next, the functions and effects of the present embodiment will be described.
(1) The auxiliary power supply unit 1 includes the auxiliary power supply device 71 disposed at an intermediate position on the power supply path for supplying power from the external power supply 45 to the motor units 13, 32, and the downstream power supply line group 72 connecting the auxiliary power supply device 71 to the motor units 13, 32. The auxiliary power supply device 71 includes: the auxiliary power supply 111 that assists with power supply from the external power supply 45 to the motor units 13, 32; and the switching circuit 114 configured to switch the connection state of the auxiliary power supply 111 to the power supply path. The connection state of the auxiliary power supply 111 that can be switched by the switching circuit 114 includes the boost state. The downstream power supply line group 72 includes the branch first downstream drive lines 161, 162 and the branch second downstream drive lines 163, 164. Each of the upstream ends of the branch first downstream drive lines 161, 162 and the branch second downstream drive lines 163, 164 is connected to the power supply path at a position downstream of the auxiliary power supply 111.

By setting the connection state of the auxiliary power supply 111 to the boost state, the boost output voltage based on the sum of the power supply voltage Vb from the external power supply 45 and the voltage from the auxiliary power supply 111 is output from the auxiliary power supply device 71. Large power based on the boost output voltage is thus supplied to each of the first power supply system and the second power supply system of the reaction motor unit 13 and each of the first power supply system and the second power supply system of the steering motor unit 32. Since large power can thus be temporarily supplied to the motor units 13, 32 by using the power from the auxiliary power supply 111, large power needs can be met without adopting an external power supply 45 with a large capacity.
(2) The portion of the intermediate drive line 102 that is located between the step-up circuit 116 and each of the upstream ends of the first downstream drive line 91a and the second downstream drive line 91b has only a wire for sending power. Accordingly, large power can be supplied to each power supply system of the motor units 13, 32 based on the boost output voltages that are substantially equal to each other. The power supplied to each power supply system is therefore less likely to vary among the power supply systems, so that the motor units 13, 32 can be stably operated.
(3) Since the connection state of the auxiliary power supply 111 that can be switched by the switching circuit 114 includes the charging state, the auxiliary power supply 111 can be charged by the external power supply 45. Accordingly, the connection state of the auxiliary power supply 111 is repeatedly set to the boost state, so that large power can be supplied to the motor units 13, 32.
(4) The connection state of the auxiliary power supply 111 that can be switched by the switching circuit 114 includes the backup state. Therefore, even if an abnormality occurs in the external power supply 45, power can be supplied from the auxiliary power supply 111, so that the motor units 13, 32 can be continuously driven.
(5) When the external power supply 45 is normal and the first condition is satisfied, the auxiliary power supply control unit 112 sets the connection state of the auxiliary power supply 111 to the boost state. Large power can thus be supplied to the motor units 13, 32 when large power is required as, for example, dry steering is performed.
(6) When the external power supply 45 is normal and the second condition is satisfied, the auxiliary power supply control unit 112 sets the connection state of the auxiliary power supply 111 to the boost state. Large power can thus be supplied to the motor units 13, 32 when large power is required as, for example, emergency steering is performed.

### (Second Embodiment)

A second embodiment of the auxiliary power supply unit, the method for controlling an auxiliary power supply unit, and the steering system will be described below with reference to the drawings. For convenience of description, the same configurations as those in the first embodiment are denoted by the same signs as those in the first embodiment, and description thereof will be omitted.

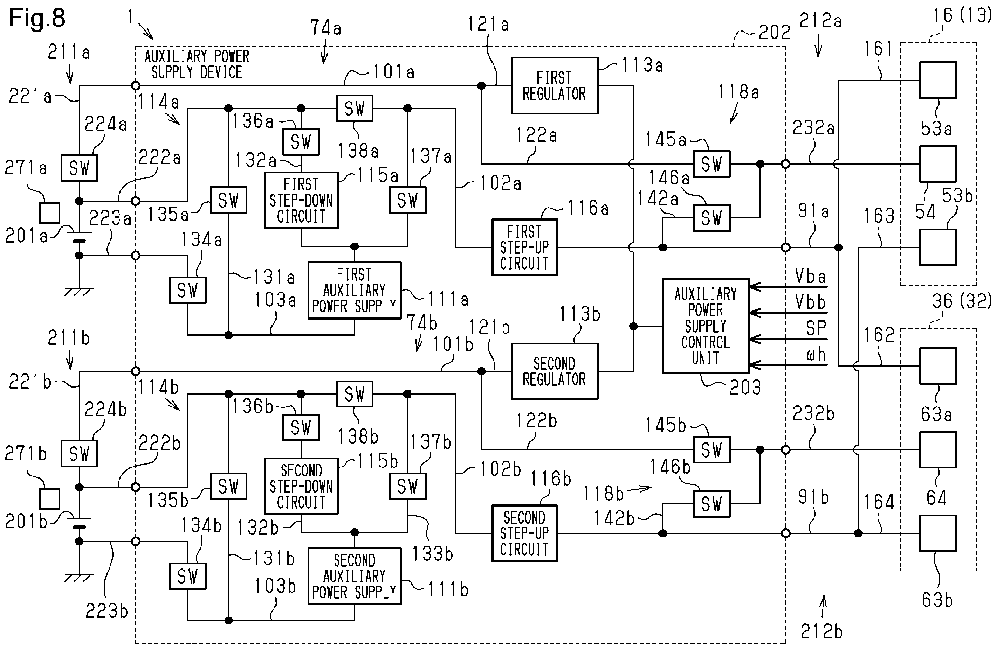

As shown in FIG. 8, a vehicle equipped with the auxiliary power supply unit 1 and the steering system 2 is equipped with two power supplies as external power supplies, namely a first power supply 201a and a second power supply 201b. Therefore, the power supply path includes a first power supply path that supplies power from the first power supply 201a to the motor units 13, 32, and a second power supply path that supplies power from the second power supply 201b to the motor units 13, 32. An auxiliary power supply device 202 of the auxiliary power supply unit 1 is provided at intermediate positions on the first power supply path and the second power supply path so as to extend across both the first power supply path and the second power supply path.

The first power supply path includes: a first upstream power supply line group 211a that connects the first power supply 201a to the auxiliary power supply device 202; a first downstream power supply line group 212a that connects the auxiliary power supply device 202 to the motor units 13, 32; and a first intermediate power supply line group 74a located inside the auxiliary power supply device 202 described later. That is, the first downstream power supply line group 212a forms part of the first power supply path. The second power supply path includes: a second upstream power supply line group 211b that connects the second power supply 201b to the auxiliary power supply device 202; a second downstream power supply line group 212b that connects the auxiliary power supply device 202 to the motor units 13, 32; and a second intermediate power supply line group 74b located inside the auxiliary power supply device 202 described later. That is, the second downstream power supply line group 212b forms part of the second power supply path.

The first upstream power supply line group 211a includes a first upstream control line 221a, a first upstream drive line 222a, and a first upstream ground line 223a. Each of the first upstream drive line 222a and the first upstream control line 221a connects the auxiliary power supply device 202 to a high potential terminal of the first power supply 201a. A first relay switch 224a that is turned on and off according to the start switch of the vehicle is located at an intermediate position on the first upstream control line 221a. The first upstream ground line 223a connects the auxiliary power supply device 202 to the ground.

The second upstream power supply line group 211b includes a second upstream control line 221b, a second upstream drive line 222b, and a second upstream ground line 223b. Each of the second upstream drive line 222b and the second upstream control line 221b connects the auxiliary power supply device 202 to a high potential terminal of the second power supply 201b. A second relay switch 224b that is turned on and off according to the start switch of the vehicle is located at an intermediate position on the second upstream control line 221b. The second upstream ground line 223b connects the auxiliary power supply device 202 to the ground.

The first downstream power supply line group 212a includes the first downstream drive line 91a of the first embodiment and a first downstream control line 232a. The first downstream drive line 91a connects the auxiliary power supply device 202 and the first power supply systems of both the reaction motor unit 13 and the steering motor unit 32. The first downstream control line 232a connects the auxiliary power supply device 202 and the reaction force control unit 54. The branch first downstream drive lines 161, 162 of the first downstream drive line 91a correspond to first individual power supply lines.

The second downstream power supply line group 212b includes the second downstream drive line 91b of the first embodiment and a second downstream control line 232b. The second downstream drive line 91b connects the auxiliary power supply device 202 and the second power supply systems of both the reaction motor unit 13 and the steering motor unit 32. The second downstream control line 232b connects the auxiliary power supply device 202 and the steering control unit 64. The branch second downstream drive lines 163, 164 of the second downstream drive line 91b correspond to second individual power supply lines.

The auxiliary power supply device 202 of the present embodiment includes a first auxiliary power supply system and a second auxiliary power supply system that are configured basically in the same manner as that of the auxiliary power supply device 71 of the first embodiment regarding the configurations other than an auxiliary power supply control unit 203 and the configuration for supplying power to the auxiliary power supply control unit 203. The first auxiliary power supply system supplies power from the first power supply 201a to the first power supply systems of both the reaction motor unit 13 and the steering motor unit 32 and to the reaction force control unit 54. The second auxiliary power supply system supplies power from the second power supply 201b to the second power supply systems of both the reaction motor unit 13 and the steering motor unit 32 and to the steering control unit 64. The first auxiliary power supply system is disposed between the first upstream power supply line group 211a and the first downstream power supply line group 212a, and the second auxiliary power supply system is disposed between the second upstream power supply line group 211b and the second downstream power supply line group 212b.

Hereinafter, regarding the configuration of the first auxiliary power supply system, the word "first" is added to the beginning of the member name of each component of the auxiliary power supply device 71 of the first embodiment, and the letter "a" is added to the sign indicating each component of the auxiliary power supply device 71 of the first embodiment, and repetitive description thereof will be omitted. Regarding the configuration of the second auxiliary power supply system, the word "second" is added to the beginning of the member name of each component of the auxiliary power supply device 71 of the first embodiment, and the letter "b" is added to the sign indicating each component of the auxiliary power supply device 71 of the first embodiment, and repetitive description thereof will be omitted.

That is, the auxiliary power supply device 202 includes: the first intermediate power supply line group 74a connecting the first upstream power supply line group 211a and the first downstream power supply line group 212a to each other; and the second intermediate power supply line group 74b connecting the second upstream power supply line group 211b and the second downstream power supply line group 212b to each other. The first intermediate power supply line group 74a includes: a first intermediate control line 101a connected to the first upstream control line 221a; a first intermediate drive line 102a connected to the first upstream drive line 222a; and a first intermediate ground line 103a connected to the first upstream ground line 223a. The second intermediate power supply line group 74b includes: a second intermediate control line 101b connected to the second upstream control line 221b; a second intermediate drive line 102b connected to the second upstream drive line 222b; and a second intermediate ground line 103b connected to the second upstream ground line 223b.

The first intermediate drive line 102a has a first external backup line 142a but does not have a first internal backup line. Therefore, the auxiliary power supply device 202 does not have a first internal selection circuit. The first intermediate drive line 102a does not branch at a position downstream of the connection point of the first external backup line 142a. Similarly, the second intermediate drive line 102b has a second external backup line 142b but does not have a second internal backup line. Therefore, the auxiliary power supply device 202 does not have a second internal selection circuit. The second intermediate drive line 102b does not branch at a position downstream of the connection point of the second external backup line 142b.

The auxiliary power supply device 202 includes, in addition to the auxiliary power supply control unit 203, a first auxiliary power supply 111a, a second auxiliary power supply 111b, a first regulator 113a, a second regulator 113b, a first switching circuit 114a, a second switching circuit 114b, a first step-down circuit 115a, a second step-down circuit 115b, a first step-up circuit 116a, a second step-up circuit 116b, a first external selection circuit 118a, and a second external selection circuit 118b. The first auxiliary power supply 111a, the first regulator 113a, the first switching circuit 114a, the first step-down circuit 115a, the first step-up circuit 116a, and the first external selection circuit 118a are connected to corresponding lines of the first intermediate power supply line group 74a in the same manner as that in the first embodiment. The second auxiliary power supply 111b, the second regulator 113b, the second switching circuit 114b, the second step-down circuit 115b, the second step-up circuit 116b, and the second external selection circuit 118b are connected to corresponding lines of the second intermediate power supply line group 74b in the same manner as that in the first embodiment.

The first downstream drive line 91a of the first downstream power supply line group 212a is connected to the first intermediate drive line 102a. In other words, each of the upstream ends of the branch first downstream drive lines 161, 162 is connected to the first intermediate drive line 102a so as to be located downstream of the first auxiliary power supply 111a, that is, downstream of the first step-up circuit 116a. The upstream end of the first downstream control line 232a is connected to a first external intermediate control line 122a of the first intermediate control line 101a.

The second downstream drive line 91b of the second downstream power supply line group 212b is connected to the second intermediate drive line 102b. In other words, each of the upstream ends of the branch second downstream drive lines 163, 164 is connected to the second intermediate drive line 102b so as to be located downstream of the second auxiliary power supply 111b, that is, downstream of the second step-up circuit 116b. The upstream end of the second downstream control line 232b is connected to a second external intermediate control line 122b of the second intermediate control line 101b.

Each of the first regulator 113a and the second regulator 113b is connected to the auxiliary power supply control unit 203. The auxiliary power supply control unit 203 operates based on the power supplied from either or both of the first regulator 113a and the second regulator 113b.

The vehicle speed SP, the steering speed wh, a power supply voltage Vba from the first power supply 201a, and a power supply voltage Vbb from the second power supply 201b are input to the auxiliary power supply control unit 203. The power supply voltage Vba is detected by a first voltage sensor 271a, and the power supply voltage Vba is detected by a second voltage sensor 271b. The auxiliary power supply control unit 203 controls various circuits including the first switching circuit 114a, the second switching circuit 114b, the first step-up circuit 116a, and the first step-up circuit 116a that are located in the auxiliary power supply device 202, based on these state quantities. That is, the auxiliary power supply control unit 203 corresponds to a switching control circuit and a step-up control circuit. For convenience of description, lines indicating signals output from the auxiliary power supply control unit 203 are not shown.

Control of the connection state of the first auxiliary power supply 111a by the auxiliary power supply control unit 203 is the same as the control by the auxiliary power supply control unit 112 of the first embodiment except that the power supply voltage Vba from the first power supply 201a is used instead of the power supply voltage Vb from the external power supply 45. Control of the connection state of the second auxiliary power supply 111b by the auxiliary power supply control unit 203 is the same as the control by the auxiliary power supply control unit 112 of the first embodiment except that the power supply voltage Vbb from the second power supply 201b is used instead of the power supply voltage Vb from the external power supply 45.

The auxiliary power supply control unit 203 also controls the first step-up circuit 116a and the second step-up circuit 116b so that a normal output voltage output from the first step-up circuit 116a and a normal output voltage output from the second step-up circuit 116b become equal to each other. The auxiliary power supply control unit 203 also controls the first step-up circuit 116a and the second step-up circuit 116b so that a boost output voltage output from the first step-up circuit 116a and a boost output voltage output from the second step-up circuit 116b become equal to each other.

### (How Power is Supplied to Reaction Motor Unit 13 and Steering Motor Unit 32)

Next, how power is supplied to the motor units 13, 32 will be described for each connection state of the first auxiliary power supply 111a and the second auxiliary power supply 111b.

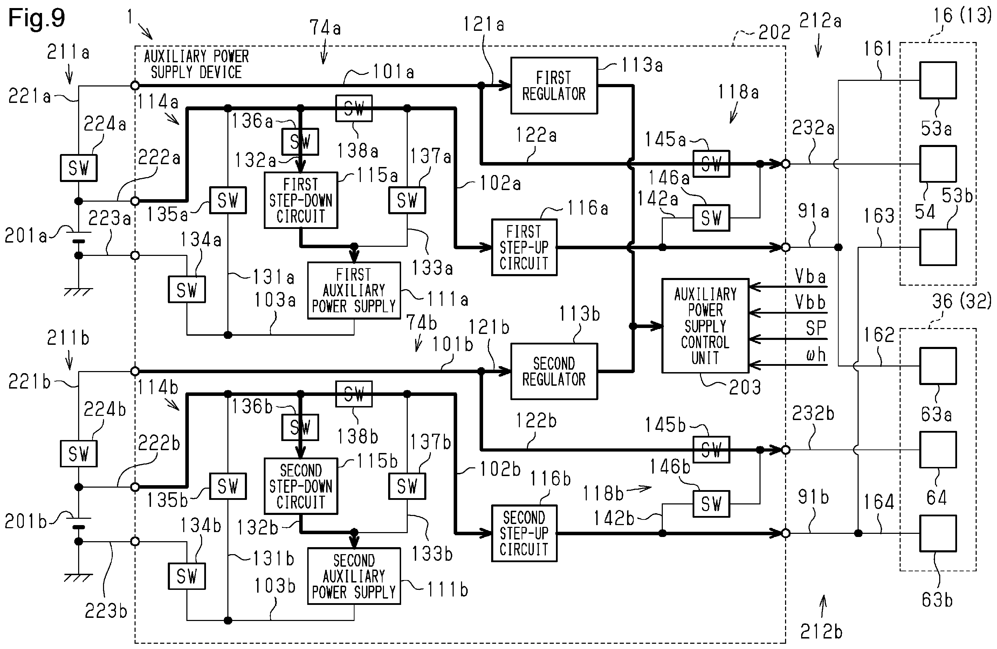

As shown in FIG. 9, when both the first auxiliary power supply 111a and the second auxiliary power supply 111b are in the charging state, the power supply voltage Vba from the first power supply 201a is input to the first step-up circuit 116a via the first intermediate drive line 102a, and the power supply voltage Vbb from the second power supply 201b is input to the second step-up circuit 116b via the second intermediate drive line 102b. The normal output voltage output from the first step-up circuit 116a is output to the first downstream drive line 91a via the first intermediate drive line 102a, and the normal output voltage output from the second step-up circuit 116b is output to the second downstream drive line 91b via the second intermediate drive line 102b. The output voltage output to the first downstream drive line 91a is supplied to the first drive circuits 53a, 63a in the same manner as that in the first embodiment. The output voltage output to the second downstream drive line 91b is supplied to the second drive circuits 53b, 63b in the same manner as that in the first embodiment.

As described above, when both the first auxiliary power supply 111a and the second auxiliary power supply 111b are in the charging state, a charging output voltage output from the first step-down circuit 115a is supplied to the first auxiliary power supply 111a via a first charge line 132a, and a charging output voltage output from the second step-down circuit 115b is supplied to the second auxiliary power supply 111b via a second charge line 132b. Since a selection switch 145a of the first external selection circuit 118a is on and a selection switch 146a of the first external selection circuit 118a is off, the power supply voltage Vba supplied from the first upstream control line 221a is output to the first downstream control line 232a via the first external intermediate control line 122a and supplied to the reaction force control unit 54. Since a selection switch 145b of the second external selection circuit 118b is on and a selection switch 146b of the second external selection circuit 118b is off, the power supply voltage Vbb supplied from the second upstream control line 221b is output to the second downstream control line 232b via the second external intermediate control line 122b and supplied to the steering control unit 64.

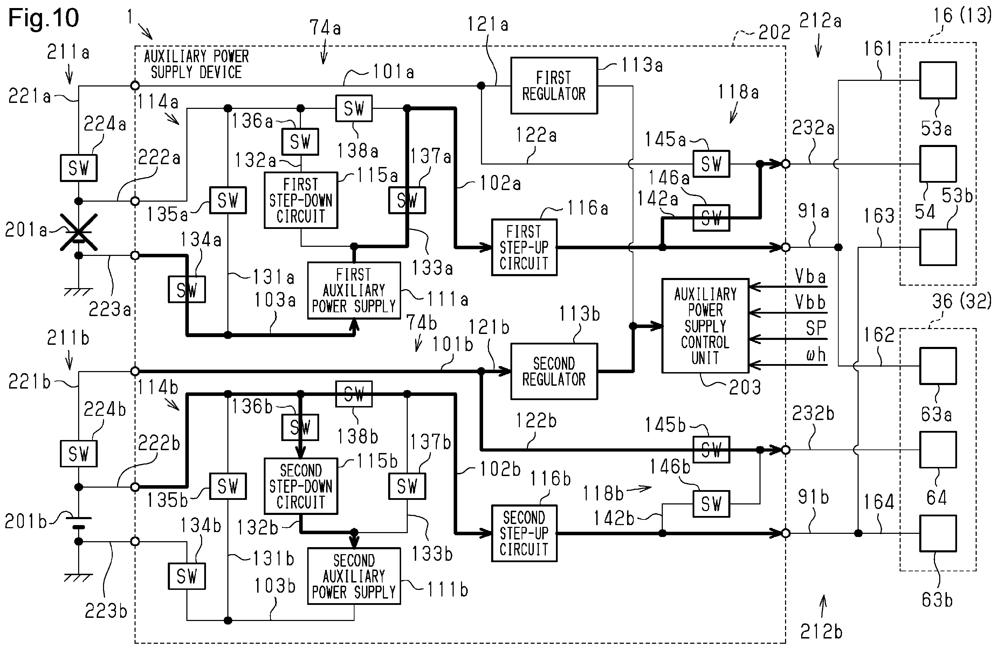

Next, as shown in FIG. 10, when an abnormality occurs in the first power supply 201a and the second power supply 201b is normal, the connection state of the first auxiliary power supply 111a becomes the backup state, and the connection state of the second auxiliary power supply 111b becomes the charging state. In this case, no power is supplied from the first power supply 201a to the auxiliary power supply device 202, while the power supply voltage Vbb from the second power supply 201b is input to the second step-up circuit 116b via the second intermediate drive line 102b. In this case, power supply to the second drive circuits 53b, 63b and the steering control unit 64 is the same as in the charging state. In the first auxiliary power supply system, the power supply voltage Vba from the first auxiliary power supply 111a is input to the first step-up circuit 116a via a first output line 133a. The normal output voltage output from the first step-up circuit 116a is output to the first downstream drive line 91a via the first intermediate drive line 102a. The output voltage output to the first downstream drive line 91a is supplied to the first drive circuits 53a, 63a in the same manner as that in the charging state.

As described above, when the connection state of the first auxiliary power supply 111a is the backup state, the selection switch 145a of the first external selection circuit 118a is off, and the selection switch 146a of the first external selection circuit 118a is on. Therefore, the voltage output from the first intermediate drive line 102a is output to the first downstream control line 232a via the first external backup line 142a and the first external intermediate control line 122a and supplied to the reaction force control unit 54.

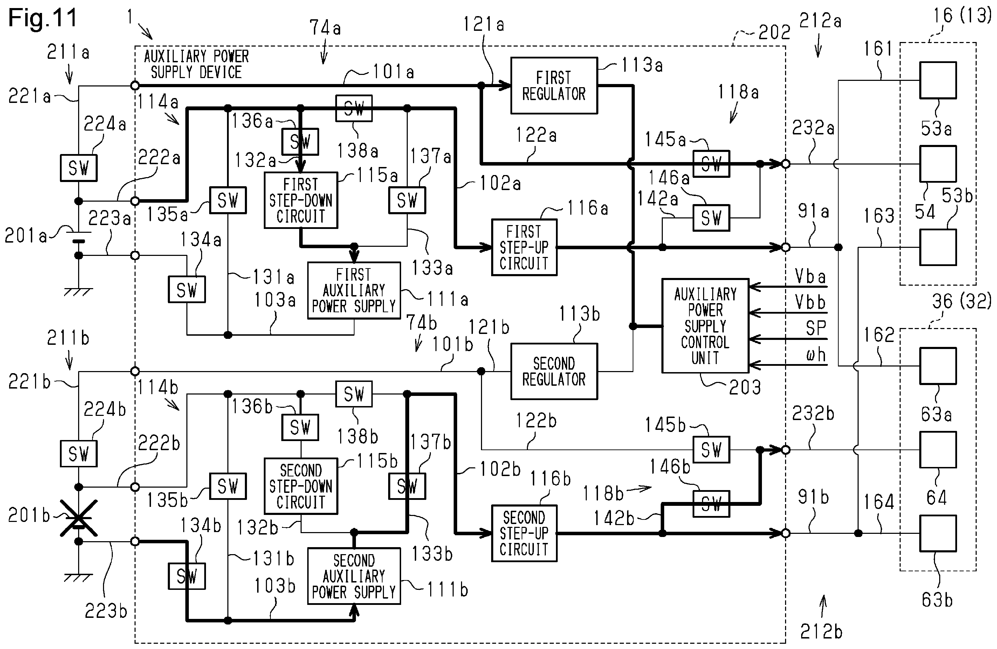

Next, as shown in FIG. 11, when the first power supply 201a is normal and an abnormality occurs in the second power supply 201b, the connection state of the first auxiliary power supply 111a becomes the charging state, and the connection state of the second auxiliary power supply 111b becomes the backup state. In this case, the power supply voltage Vba from the first power supply 201a is supplied to the first step-up circuit 116a via the first intermediate drive line 102a, while no power is supplied from the second power supply 201b to the auxiliary power supply device 202. In this case, power supply to the first drive circuits 53a, 63a and the reaction force control unit 54 is the same as in the charging state. In the second auxiliary power supply system, the voltage from the second auxiliary power supply 111b is input to the second step-up circuit 116b via a second output line 133b. The normal output voltage output from the second step-up circuit 116b is output to the second downstream drive line 91b via the second intermediate drive line 102b. The output voltage output to the second downstream drive line 91b is supplied to the second drive circuits 53b, 63b in the same manner as that in the charging state.

As described above, when the connection state of the second auxiliary power supply 111b is the backup state, the selection switch 145b of the second external selection circuit 118b is off, and the selection switch 146b of the second external selection circuit 118b is on. Therefore, the voltage output from the second intermediate drive line 102b is output to the second downstream control line 232b via the second external backup line 142b and the second external intermediate control line 122b and supplied to the steering control unit 64.

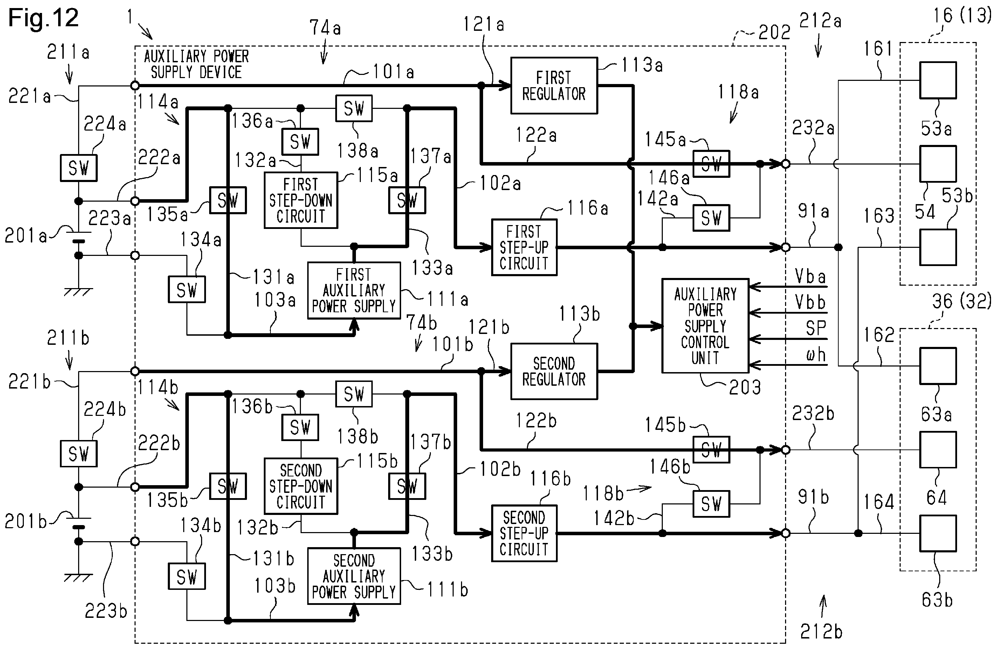

Next, as shown in FIG. 12, the case where both the first auxiliary power supply 111a and the second auxiliary power supply 111b are in the boost state will be described. In this case, the power supply voltage Vba from the first power supply 201a is input to a low potential terminal of the first auxiliary power supply 111a via the first intermediate drive line 102a, a first boost line 131a, and the first intermediate ground line 103a. The power supply voltage Vbb from the second power supply 201b is input to a low potential terminal of the second auxiliary power supply 111b via the second intermediate drive line 102b, a second boost line 131b, and the second intermediate ground line 103b. That is, the first power supply 201a is connected in series with the first auxiliary power supply 111a, and the second power supply 201b is connected in series with the second auxiliary power supply 111b. A total voltage that is the sum of the power supply voltage Vba from the first power supply 201a and the voltage from the first auxiliary power supply 111a is thus input to the first step-up circuit 116a. Therefore, the boost output voltage higher than the normal output voltage is output from the first step-up circuit 116a. A total voltage that is the sum of the power supply voltage Vbb from the second power supply 201 b and the voltage from the second auxiliary power supply 111b is input to the second step-up circuit 116b. Therefore, the boost output voltage higher than the normal output voltage is output from the second step-up circuit 116b. The output voltage output from the first step-up circuit 116a and the output voltage output from the second step-up circuit 116b are supplied to the first drive circuits 53a, 63a and the second drive circuits 53b, 63b in the same manner as that in the charging state. Large power can thus be supplied to the motor units 13, 32.

As described above, when the connection state of both the first auxiliary power supply 111a and the second auxiliary power supply 111b is the boost state, power is supplied to the auxiliary power supply control unit 203, the reaction force control unit 54, and the steering control unit 64 in the same manner as that in the charging state.

The present embodiment has the following functions and effects in addition to the functions and effects that are similar to the functions and effects described above in (1) and (3) to (6) of the first embodiment.

(7) The first downstream power supply line group 212a includes the branch first downstream drive lines 161, 162 and the branch second downstream drive lines 163, 164. Each of the upstream ends of the branch first downstream drive lines 161, 162 is connected to the first intermediate drive line 102a at a position downstream of the first step-up circuit 116a. Each of the upstream ends of the branch second downstream drive lines 163, 164 is connected to the second intermediate drive line 102b at a position downstream of the second step-up circuit 116b. The auxiliary power supply control unit 203 controls the first step-up circuit 116a and the second step-up circuit 116b so that the boost output voltage output from the first step-up circuit 116a and the boost output voltage output from the second step-up circuit 116b become equal to each other. Accordingly, large power can be supplied to each power supply system of the motor units 13, 32 based on the boost output voltages that are substantially equal to each other. The power supplied to each power supply system is therefore less likely to vary among the power supply systems, so that the motor units 13, 32 can be stably operated.

Each of the above embodiments can be modified as follows. The above embodiments and the following modifications can be combined as long as no technical contradiction arises.
- In the second embodiment, the auxiliary power supply device 202 may include a first auxiliary power supply control unit for controlling the first auxiliary power supply system and a second auxiliary power supply control unit for controlling the second auxiliary power supply system, instead of the single auxiliary power supply control unit 203.
- In the second embodiment, the first step-up circuit 116a and the second step-up circuit 116b may not be controlled so that the output voltage output from the first step-up circuit 116a and the output voltage output from the second step-up circuit 116b become equal to each other. In this case, the auxiliary power supply device 202 may not include the first step-up circuit 116a and the second step-up circuit 116b. In the first embodiment, the auxiliary power supply device 71 may not include the step-up circuit 116.
- In the second embodiment, the auxiliary power supply device 202 may include: a first internal backup line and a first internal selection circuit that connect the first intermediate drive line 102a and a first internal intermediate control line 121a to each other; and a second internal backup line and a second internal selection circuit that connect the second intermediate drive line 102b and a second internal intermediate control line 121b to each other. With this configuration, the motor units 13, 32 can be continuously driven even if an abnormality occurs in both the first power supply 201a and the second power supply 201b.
- In the second embodiment, power supply to the reaction force control unit 54 and the steering control unit 64 may be made redundant. Specifically, for example, the first downstream control line 232a is made to branch into two toward the downstream side, so that the auxiliary power supply device 202 is connected to the reaction force control unit 54 and the steering control unit 64 by this first downstream control line 232a. The second downstream control line 232b is also made to branch into two toward the downstream side, so that the auxiliary power supply device 202 is connected to the reaction force control unit 54 and the steering control unit 64 by this second downstream control line 232b. The wires in the auxiliary power supply device 202 are controlled so that the second power supply 201b is disconnected from the second downstream control line 232b when the first power supply 201a is normal, and that the second power supply 201b is connected to the second downstream control line 232b when the first power supply 201a is abnormal.
- In the first embodiment, the auxiliary power supply device 71 may not include the step-down circuit 115. In the second embodiment, the auxiliary power supply device 202 may not include the step-down circuits 115a, 115b.
- In the first embodiment, the fifth switch 138 may be provided on the intermediate drive line 102 so as to be located between the connection point of the boost line 131 and the connection point of the charge line 132. This modification can be similarly applied to the first switching circuit 114a and the second switching circuit 114b of the second embodiment.
- In the first embodiment, the branch first downstream drive line 161 of the first downstream drive line 91a may be connected to the first drive circuit 53a of the reaction motor unit 13, and the branch first downstream drive line 162 of the first downstream drive line 91a may be connected to the second drive circuit 53b of the reaction motor unit 13. The branch second downstream drive line 163 of the second downstream drive line 91b may be connected to the first drive circuit 63a of the steering motor unit 32, and the branch second downstream drive line 164 of the second downstream drive line 91b may be connected to the second drive circuit 63b of the steering motor unit 32.
- In the first embodiment, the intermediate drive line 102 branches into two at a position downstream of the connection point of the auxiliary power supply 111. However, the present disclosure is not limited to this, and the intermediate drive line 102 may not branch. In this case, for example, a drive line branching into four toward the downstream side can be adopted as the first downstream drive line 91a of the downstream power supply line group 72. The intermediate drive line 102 may branch into three or more at a position downstream of the connection point of the auxiliary power supply 111. In this case, for example, a drive line that does not branch toward the downstream side can be adopted as the first downstream drive line 91a.

Similarly, in the second embodiment, the first intermediate drive line 102a may branch into two or more at a position downstream of the first step-up circuit 116a, and the second intermediate drive line 102b may branch into two or more at a position downstream of the second step-up circuit 116b.
- In the first embodiment, the switching circuit 114 may be configured so that the connection state of the auxiliary power supply 111 can be switched only between the boost state and the charging state and cannot be switched to the backup state. - In the first embodiment, the switching circuit 114 may be configured so that the connection state of the auxiliary power supply 111 can be switched only between the boost state and the backup state and cannot be switched to the charging state. In this case, the auxiliary power supply 111 may be a primary battery. Alternatively, the switching circuit 114 may be configured so that the connection state of the auxiliary power supply 111 can be switched only between the boost state and other state(s) other than the charging state and the backup state and cannot be switched to the charging state and the backup state. An example of such other state(s) is a state in which the external power supply 45 is connected to the power supply target and the auxiliary power supply 111 is disconnected from the intermediate drive line 102. In this case, the auxiliary power supply 111 may be a primary battery. This modification can be similarly applied to the first switching circuit 114a and the second switching circuit 114b.
- In each of the above embodiments, both the determination as to whether the first condition is satisfied and the determination as to whether the second condition is satisfied are made. However, the present disclosure is not limited to this, and only one of these determinations may be made by the auxiliary power supply control unit 112, 203. The auxiliary power supply control units 112, 203 may use a condition other than the first condition and the second condition as the condition to supply large power to the power supply target.
- In the first embodiment, the auxiliary power supply 111 may be, for example, an electric double layer capacitor (EDLC) or a lithium-ion battery (LIB). This modification can be similarly applied to the first auxiliary power supply 111a and the second auxiliary power supply 111b of the second embodiment.
- In each of the above embodiments, the various circuits located inside the auxiliary power supply device 71, 202 are controlled by the auxiliary power supply control unit 112, 203. However, the present disclosure is not limited to this, and the auxiliary power supply device 71, 202 may not include the auxiliary power supply control unit 112, 203, and the various circuits may be controlled by an external control device (e.g., the reaction force control unit 54).
- In each of the above embodiments, the reaction force control unit 54 controls both the first drive circuit 53a and the second drive circuit 53b. However, the present disclosure is not limited to this. For example, the reaction force control device 16 may include a first reaction force control unit that controls the first drive circuit 53a and a second reaction force control unit that controls the second drive circuit 53b. In this case, the first reaction force control unit may be configured to calculate a command value such as a current and send the command value to the second reaction force control unit, and the second reaction force control unit may be configured to operate according to the received command value. In other words, the reaction force control device 16 may be configured as a master-slave control device with the first reaction force control unit serving as a master control unit and the second reaction force control unit serving as a slave control unit. This modification can be similarly applied to the steering control device 36.
- In each of the above embodiments, the reaction force control unit 54 may be a processing circuit that includes (1) one or more processors that operate according to a computer program (software), (2) one or more dedicated hardware circuits such as an application-specific integrated circuit (ASIC) that perform at least part of various processes, or (3) any combination thereof. This modification can be similarly applied to the steering control unit 64 and the auxiliary power supply control units 112, 203. The processor includes a CPU and a memory such as RAM and ROM, and the memory stores program codes or commands configured to cause the CPU to perform processes. The memory, namely a non-transitory computer-readable medium, includes any available media that can be accessed by a general purpose or special purpose computer.
- In each of the above embodiments, the steering system 2 has a linkless structure in which the reaction force unit 4 and the steering unit 6 are always mechanically disconnected from each other. However, the present disclosure is not limited to this. For example, as shown by long dashed double-short dashed lines in FIG. 1, the reaction force unit 4 and the steering unit may be mechanically disconnectable by a clutch 301. The steering system 2 is not limited to the steer-by-wire steering system, and may be an electric power steering system that applies torque of an assist motor unit to the steering shaft 11 or the rack shaft 22. In this case, the assist motor unit that is a power supply target has a plurality of energization systems.
- In each of the above embodiments, a motor and a control device are integrated in the motor unit, however, the motor and the control device may be provided separately from each other. The power supply target is not limited to the motor that is a driving source for the steering system 2, and may be, for example, a motor that is used as a travel driving source for a battery electric vehicle.

## Claims

1. An auxiliary power supply unit (1) that supplies power from an external power supply (45) to a motor including a plurality of power supply systems, the auxiliary power supply unit (1) comprising:
an auxiliary power supply device (71) located at an intermediate position on a power supply path that supplies power from the external power supply (45) to the motor ; and
a power supply line group (72) forming part of the power supply path, the power supply line group (72) connecting the auxiliary power supply device (71) to the motor , wherein
the auxiliary power supply device (71) includes
an auxiliary power supply (111) provided on the power supply path to assist with power supply from the external power supply (45) to the motor , and
a switching circuit (114) configured to switch a connection state of the auxiliary power supply (111) to the power supply path,
the connection state of the auxiliary power supply (111) includes a boost state in which the auxiliary power supply (111) is connected in series with the external power supply (45) between the external power supply (45) and the motor ,
the power supply line group (72) includes a plurality of individual power supply lines (161, 162, 163, 164) connected to the plurality of power supply systems,
each of upstream ends of the plurality of individual power supply lines (161, 162, 163, 164) is connected to the power supply path at a position downstream of the auxiliary power supply (111),
the auxiliary power supply device (71) further includes a step-up circuit (116) provided on the power supply path so as to be located downstream of the auxiliary power supply (111) when in the boost state,
each of the upstream ends of the plurality of individual power supply lines (161, 162, 163, 164) is connected to the power supply path at a position downstream of the step-up circuit (116), and
a portion of the power supply path that is located between the step-up circuit (116) and the upstream ends has only a wire for sending power.

2. An auxiliary power supply unit (1) that supplies power from an external power supply (201a, 201b) to a motor including a plurality of power supply systems, the auxiliary power supply unit (1) comprising:
an auxiliary power supply device (202) located at an intermediate position on a power supply path that supplies power from the external power supply (201a, 201b) to the motor ; and
a power supply line group (212a, 212b) forming part of the power supply path, the power supply line group (212a, 212b) connecting the auxiliary power supply device (202) to the motor , wherein
the auxiliary power supply device (202) includes
an auxiliary power supply (111a, 111b) provided on the power supply path to assist with power supply from the external power supply (201a, 201b) to the motor , and
a switching circuit (114a, 114b) configured to switch a connection state of the auxiliary power supply (111a, 111b) to the power supply path,
the connection state of the auxiliary power supply (111a, 111b) includes a boost state in which the auxiliary power supply (111a, 111b) is connected in series with the external power supply (201a, 201b) between the external power supply (201a, 201b) and the motor ,
the power supply line group (212a, 212b) includes a plurality of individual power supply lines (161, 162, 163, 164) connected to the plurality of power supply systems,
each of upstream ends of the plurality of individual power supply lines (161, 162, 163, 164) is connected to the power supply path at a position downstream of the auxiliary power supply (111a, 111b),
the external power supply (201a, 201b) includes a first power supply (201a) and a second power supply (201b),
the power supply path includes a first power supply path that supplies power from the first power supply to the motor , and a second power supply path that supplies power from the second power supply to the motor ,
the power supply line group (212a, 212b) includes
a first power supply line group (212a) forming part of the first power supply path, the first power supply line group (212a) connecting the auxiliary power supply device (202) to the motor , and
a second power supply line group (212b) forming part of the second power supply path, the second power supply line group (212b) connecting the auxiliary power supply device (202) to the motor ,
the auxiliary power supply (111a, 111b) includes
a first auxiliary power supply (111a) provided on the first power supply path to assist with power supply from the first power supply to the motor , and
a second auxiliary power supply (111b) provided on the second power supply path to assist with power supply from the second power supply to the motor ,
the switching circuit (114a, 114b) includes
a first switching circuit (114a) configured to switch a connection state of the first auxiliary power supply (111a) to the first power supply path, and
a second switching circuit (114b) configured to switch a connection state of the second auxiliary power supply (111b) to the second power supply path,
the first power supply line group (212a) includes a plurality of first individual power supply lines (161, 162),
the second power supply line group (212b) includes a plurality of second individual power supply lines (163, 164),
each of upstream ends of the plurality of first individual power supply lines (161, 162) is connected to the first power supply path at a position downstream of the first auxiliary power supply (111a),
each of upstream ends of the plurality of second individual power supply lines (163, 164) is connected to the second power supply path at a position downstream of the second auxiliary power supply (111b),
the auxiliary power supply device (202) further includes
a first step-up circuit (116a) provided on the first power supply path so as to be located downstream of the first auxiliary power supply (111a) when in the boost state,
a second step-up circuit (116b) provided on the second power supply path so as to be located downstream of the second auxiliary power supply (111b) when in the boost state, and
a step-up control circuit (203) configured to control the first step-up circuit (116a) and the second step-up circuit (116b) in such a way that an output voltage output from the first step-up circuit (116a) and an output voltage output from the second step-up circuit (116b) become equal to each other,
each of the upstream ends of the plurality of first individual power supply lines (161, 162) is connected to the first power supply path at a position downstream of the first step-up circuit (116a), and
each of the upstream ends of the plurality of second individual power supply lines (163, 164) is connected to the second power supply path at a position downstream of the second step-up circuit (116b).

3. The auxiliary power supply unit (1) according to claim 1 or 2, wherein the connection state of the auxiliary power supply (111; 111a, 111b) further includes a charging state in which the auxiliary power supply (111; 111a, 111b) is connected in parallel with the motor to the external power supply (45; 201a, 201b).

4. The auxiliary power supply unit (1) according to any one of claims 1 to 3, wherein the connection state of the auxiliary power supply (111; 111a, 111b) further includes a backup state in which the auxiliary power supply (111; 111a, 111b) is disconnected from the external power supply (45; 201a, 201b) and the auxiliary power supply (111; 111a, 111b) is connected to the motor .

5. The auxiliary power supply unit (1) according to any one of claims 1 to 4, wherein
the auxiliary power supply device (71; 202) further includes a switching control circuit (203) configured to control the switching circuit (114; 114a, 114b), and
when the external power supply (45; 201a, 201b) is normal and a condition to supply large power to the motor is satisfied, the switching control circuit (203) controls the switching circuit (114; 114a, 114b) in such a way that the connection state of the auxiliary power supply (111; 111a, 111b) becomes the boost state.

6. The auxiliary power supply unit (1) according to claim 5, wherein
the motor is a motor unit (13, 32) that is a driving source for a steering system (2) mounted on a vehicle, and
the condition is a first condition including
that a vehicle speed is equal to or lower than a travel determination threshold, and
that a steering speed of a steering wheel (3) is equal to or higher than a steering execution determination threshold.

7. The auxiliary power supply unit (1) according to claim 5 or 6, wherein
the motor is the motor unit (13, 32) that is the driving source for the steering system (2) mounted on the vehicle, and
the condition is a second condition including that the steering speed of the steering wheel (3) is equal to or higher than a high speed steering determination threshold.

8. A method for controlling an auxiliary power supply unit (1) that supplies power from an external power supply (45) to a motor including a plurality of power supply systems,
the auxiliary power supply unit (1) including
an auxiliary power supply device (71) located at an intermediate position on a power supply path that supplies power from the external power supply (45) to the motor , and
a power supply line group (72) forming part of the power supply path, the power supply line group (72) connecting the auxiliary power supply device (71) to the motor ,
the auxiliary power supply device (71) including
an auxiliary power supply (111) provided on the power supply path to assist with power supply from the external power supply (45) to the motor , and
a switching circuit (114) configured to switch a connection state of the auxiliary power supply (111) to the power supply path,
the connection state of the auxiliary power supply (111) including a boost state in which the auxiliary power supply (111) is connected in series with the external power supply (45) between the external power supply (45) and the motor ,
the power supply line group (72) including a plurality of individual power supply lines (161, 162, 163, 164) connected to the plurality of power supply systems,
each of upstream ends of the plurality of individual power supply lines (161, 162, 163, 164) being connected to the power supply path at a position downstream of the auxiliary power supply (111),
the auxiliary power supply device (71) further including a step-up circuit (116) provided on the power supply path so as to be located downstream of the auxiliary power supply (111),
each of the upstream ends of the plurality of individual power supply lines (161, 162, 163, 164) being connected to the power supply path at a position downstream of the step-up circuit (116), and
a portion of the power supply path that is located between the step-up circuit (116) and the upstream ends having only a wire for sending power,
the method comprising:
determining whether the external power supply (45) is normal;
determining whether a condition to supply large power to the motor is satisfied; and
when a voltage from the external power supply (45) is normal and the condition is satisfied, controlling the switching circuit (114) in such a way that the connection state of the auxiliary power supply (111) becomes the boost state.

9. A method for controlling an auxiliary power supply unit (1) that supplies power from an external power supply (201a, 201b) to a motor including a plurality of power supply systems,
the auxiliary power supply unit (1) including
an auxiliary power supply device (202) located at an intermediate position on a power supply path that supplies power from the external power supply (201a, 201b) to the motor , and
a power supply line group (212a, 212b) forming part of the power supply path, the power supply line group (212a, 212b) connecting the auxiliary power supply device (202) to the motor ,
the auxiliary power supply device (202) including
an auxiliary power supply (111a, 111b) provided on the power supply path to assist with power supply from the external power supply (201a, 201b) to the motor , and
a switching circuit (114a, 114b) configured to switch a connection state of the auxiliary power supply (111a, 111b) to the power supply path,
the connection state of the auxiliary power supply (111a, 111b) including a boost state in which the auxiliary power supply (111a, 111b) is connected in series with the external power supply (201a, 201b) between the external power supply (201a, 201b) and the motor ,
the power supply line group (212a, 212b) including a plurality of individual power supply lines (161, 162, 163, 164) connected to the plurality of power supply systems,
each of upstream ends of the plurality of individual power supply lines (161, 162, 163, 164) being connected to the power supply path at a position downstream of the auxiliary power supply (111a, 111b),
the external power supply (201a, 201b) including a first power supply (201a) and a second power supply (201b),
the power supply path including a first power supply path that supplies power from the first power supply to the motor , and a second power supply path that supplies power from the second power supply to the motor,
the power supply line group (212a, 212b) including
a first power supply line group (212a) forming part of the first power supply path, the first power supply line group (212a) connecting the auxiliary power supply device (202) to the motor , and
a second power supply line group (212b) forming part of the second power supply path, the second power supply line group (212b) connecting the auxiliary power supply device (202) to the motor ,
the auxiliary power supply (111a, 111b) including
a first auxiliary power supply (111a) provided on the first power supply path to assist with power supply from the first power supply to the motor , and
a second auxiliary power supply (111b) provided on the second power supply path to assist with power supply from the second power supply to the motor ,
the switching circuit (114a, 114b) including
a first switching circuit (114a) configured to switch a connection state of the first auxiliary power supply (111a) to the first power supply path, and
a second switching circuit (114b) configured to switch a connection state of the second auxiliary power supply (111b) to the second power supply path,
the first power supply line group (212a) including a plurality of first individual power supply lines (161, 162),
the second power supply line group (212b) including a plurality of second individual power supply lines (163, 164),
each of upstream ends of the plurality of first individual power supply lines (161, 162) being connected to the first power supply path at a position downstream of the first auxiliary power supply (111a),
each of upstream ends of the plurality of second individual power supply lines (163, 164) being connected to the second power supply path at a position downstream of the second auxiliary power supply (111b),
the auxiliary power supply device (202) further including
a first step-up circuit (116a) provided on the first power supply path so as to be located downstream of the first auxiliary power supply (111a) when in the boost state,
a second step-up circuit (116b) provided on the second power supply path so as to be located downstream of the second auxiliary power supply (111b) when in the boost state, and
a step-up control circuit (203) configured to control the first step-up circuit (116a) and the second step-up circuit (116b) in such a way that an output voltage output from the first step-up circuit (116a) and an output voltage output from the second step-up circuit (116b) become equal to each other,
each of the upstream ends of the plurality of first individual power supply lines (161, 162) being connected to the first power supply path at a position downstream of the first step-up circuit (116a), and
each of the upstream ends of the plurality of second individual power supply lines (163, 164) being connected to the second power supply path at a position downstream of the second step-up circuit (116b),
the method comprising:
determining whether the external power supply (201a, 201b) is normal;
determining whether a condition to supply large power to the motor is satisfied; and
when a voltage from the external power supply (201a, 201b) is normal and the condition is satisfied, controlling the switching circuit (114a, 114b) in such a way that the connection state of the auxiliary power supply (111a, 111b) becomes the boost state.

10. A steering system (2) comprising:
a motor unit (13, 32) including a plurality of power supply systems; and
the auxiliary power supply unit (1) according to any one of claims 1 to 7 that supplies power from the external power supply (45; 201a, 201b) to the motor unit (13, 32).

## Patentansprüche

1. Hilfsstromversorgungseinheit (1), die einen Motor mit mehreren Stromversorgungssystemen von einer externen Stromversorgung (45) mit Strom versorgt, wobei die Hilfsstromversorgungseinheit (1) umfasst:
eine Hilfsstromversorgungsvorrichtung (71), die sich an einer Zwischenposition in einem Stromversorgungspfad befindet, der den Motor mit Strom von der externen Stromversorgung (45) versorgt; und
eine Stromversorgungsleitungsgruppe (72), die einen Teil des Stromversorgungspfads bildet, wobei die Stromversorgungsleitungsgruppe (72) die Hilfsstromversorgungsvorrichtung (71) mit dem Motor verbindet, wobei
die Hilfsstromversorgungsvorrichtung (71) umfasst:
eine Hilfsstromversorgung (111), die im Stromversorgungspfad vorgesehen ist, um die Stromversorgung des Motors von der externen Stromversorgung (45) zu unterstützen, und
eine Schaltschaltung (114), die so konfiguriert ist, dass sie den Verbindungszustand der Hilfsstromversorgung (111) mit dem Stromversorgungspfad umschaltet,
der Verbindungszustand der Hilfsstromversorgung (111) einen Boost-Zustand umfasst, in dem die Hilfsstromversorgung (111) in Reihe mit der externen Stromversorgung (45) zwischen der externen Stromversorgung (45) und dem Motor geschaltet ist,
die Stromversorgungsleitungsgruppe (72) mehrere einzelne Stromversorgungsleitungen (161, 162, 163, 164) umfasst, die mit den Stromversorgungssystemen verbunden sind.
die jeweiligen stromaufwärts gelegenen Enden der einzelnen Stromversorgungsleitungen (161, 162, 163, 164) an einer Position stromabwärts der Hilfsstromversorgung (111) mit dem Stromversorgungspfad verbunden sind,
die Hilfsstromversorgungsvorrichtung (71) ferner eine Verstärkungsschaltung (116) umfasst, die im Stromversorgungspfad so angeordnet ist, dass sie sich im Boost-Zustand stromabwärts der Hilfsstromversorgung (111) befindet,
jedes der stromaufwärts gelegenen Enden der einzelnen Stromversorgungsleitungen (161, 162, 163, 164) an einer Position stromabwärts der Verstärkungsschaltung (116) mit dem Stromversorgungspfad verbunden ist, und
ein Abschnitt des Stromversorgungspfads, der sich zwischen der Verstärkungsschaltung (116) und den stromauf gelegenen Enden befindet, nur über einen Draht zum Senden von Strom verfügt.

2. Hilfsstromversorgungseinheit (1), die einen Motor mit mehreren Stromversorgungssystemen von einer externen Stromversorgung (201a, 201b) mit Strom versorgt, wobei die Hilfsstromversorgungseinheit (1) umfasst:
eine Hilfsstromversorgungsvorrichtung (202), das sich an einer Zwischenposition in einem Stromversorgungspfad befindet, der den Motor mit Strom von der externen Stromversorgung (201a, 201b) versorgt; und
eine Stromversorgungsleitungsgruppe (212a, 212b), die einen Teil des Stromversorgungspfads bildet, wobei die Stromversorgungsleitungsgruppe (212a, 212b) die Hilfsstromversorgungsvorrichtung (202) mit dem Motor verbindet, wobei
die Hilfsstromversorgungsvorrichtung (202) umfasst:
eine Hilfsstromversorgung (111a, 111b), die im Stromversorgungspfad vorgesehen ist, um die Stromversorgung des Motors von der externen Stromversorgung (201a, 201b) zu unterstützen, und
eine Schaltschaltung (114a, 114b), die so konfiguriert ist, dass sie den Verbindungszustand der Hilfsstromversorgung (111a, 111b) mit dem Stromversorgungspfad umschaltet,
der Verbindungszustand der Hilfsstromversorgung (111a, 111b) einen Boost-Zustand umfasst, in dem die Hilfsstromversorgung (111a, 111b) in Reihe mit der externen Stromversorgung (201a, 201b) zwischen der externen Stromversorgung (201a, 201b) und dem Motor geschaltet ist,
die Stromversorgungsleitungsgruppe (212a, 212b) mehrere einzelne Stromversorgungsleitungen (161, 162, 163, 164) umfasst, die mit den Stromversorgungssystemen verbunden sind,
die jeweiligen stromaufwärts gelegenen Enden der einzelnen Stromversorgungsleitungen (161, 162, 163, 164) an einer Position stromabwärts der Hilfsstromversorgung (111a, 111b) mit dem Stromversorgungspfad verbunden sind,
die externe Stromversorgung (201a, 201b) eine erste Stromversorgung (201a) und eine zweite Stromversorgung (201b) umfasst,
der Stromversorgungspfad einen ersten Stromversorgungspfad, der den Motor mit Strom von der ersten Stromversorgung versorgt, und einen zweiten Stromversorgungspfad, der den Motor mit Strom von der zweiten Stromversorgung versorgt, umfasst,
die Stromversorgungsleitungsgruppe (212a, 212b) umfasst:
eine erste Stromversorgungsleitungsgruppe (212a), die einen Teil des ersten Stromversorgungspfads bildet, wobei die erste Stromversorgungsleitungsgruppe (212a) die Hilfsstromversorgungsvorrichtung (202) mit dem Motor verbindet, und
eine zweite Stromversorgungsleitungsgruppe (212b), die einen Teil des zweiten Stromversorgungspfads bildet, wobei die zweite Stromversorgungsleitungsgruppe (212b) die Hilfsstromversorgungsvorrichtung (202) mit dem Motor verbindet,
die Hilfsstromversorgung (111a, 111b) umfasst:
eine erste Hilfsstromversorgung (111a), die im ersten Stromversorgungspfad vorgesehen ist, um die Stromversorgung des Motors von der ersten Stromversorgung zu unterstützen, und
eine zweite Hilfsstromversorgung (111b), die im zweiten Stromversorgungspfad vorgesehen ist, um die Stromversorgung des Motors von der zweiten Stromversorgung zu unterstützen.
die Schaltschaltung (114a, 114b) umfasst:
eine erste Schaltschaltung (114a), die so konfiguriert ist, dass sie einen Verbindungszustand der ersten Hilfsstromversorgung (111a) mit dem ersten Stromversorgungspfad umschaltet, und
eine zweite Schaltschaltung (114b), die so konfiguriert ist, dass sie den Verbindungszustand der zweiten Hilfsstromversorgung (111b) mit dem zweiten Stromversorgungspfad umschaltet,
die erste Stromversorgungsleitungsgruppe (212a) mehrere erste einzelne Stromversorgungsleitungen (161, 162) umfasst,
die zweite Stromversorgungsleitungsgruppe (212b) mehrere zweite einzelne Stromversorgungsleitungen (163, 164) umfasst,
jedes der stromaufwärts gelegenen Enden der ersten einzelnen Stromversorgungsleitungen (161, 162) an einer Position stromabwärts der ersten Hilfsstromversorgung (111a) mit dem ersten Stromversorgungspfad verbunden ist,
jedes der stromaufwärts gelegenen Enden der zweiten einzelnen Stromversorgungsleitungen (163, 164) an einer Position stromabwärts der zweiten Hilfsstromversorgung (111b) mit dem zweiten Stromversorgungspfad verbunden ist,
die Hilfsstromversorgungsvorrichtung (202) ferner umfasst:
eine erste Verstärkungsschaltung (116a), die im ersten Stromversorgungspfad so angeordnet ist, dass die sich im Boost-Zustand stromab von der ersten Hilfsstromversorgungsvorrichtung (111a) befindet,
eine zweite Verstärkungsschaltung (116b), die im zweiten Stromversorgungspfad so angeordnet ist, dass sie sich im Boost-Zustand stromab von der zweiten Hilfsstromversorgungsvorrichtung (111b) befindet, und
eine Verstärkungssteuerschaltung (203), die so konfiguriert ist, dass sie die erste Verstärkungsschaltung (116a) und die zweite Verstärkungsschaltung (116b) so steuert, dass eine von der ersten Verstärkungsschaltung (116a) ausgegebene Ausgangsspannung und eine von der zweiten Verstärkungsschaltung ausgegebene Ausgangsspannung (116b) gleich werden,
jedes der stromaufwärts gelegenen Enden der ersten einzelnen Stromversorgungsleitungen (161, 162) an einer Position stromabwärts der ersten Verstärkungsschaltung (116a) mit dem ersten Stromversorgungspfad verbunden ist, und
jedes der stromaufwärts gelegenen Enden der zweiten einzelnen Stromversorgungsleitungen (163, 164) an einer Position stromabwärts der zweiten Verstärkungsschaltung (116b) mit dem zweiten Stromversorgungspfad verbunden ist.

3. Hilfsstromversorgungseinheit (1) nach Anspruch 1 oder 2, wobei der Verbindungszustand der Hilfsstromversorgung (111; 111a, 111b) ferner einen Ladezustand umfasst, in dem die Hilfsstromversorgung (111; 111a, 111b) parallel zum Motor an die externe Stromversorgung (45; 201a, 201b) angeschlossen ist.

4. Hilfsstromversorgungseinheit (1) nach einem der Ansprüche 1 bis 3, wobei der Verbindungszustand der Hilfsstromversorgung (111; 111a, 111b) ferner einen Backup-Zustand umfasst, in dem die Hilfsstromversorgung (111; 111a, 111b) von der externen Stromversorgung (45; 201a, 201b) getrennt und die Hilfsstromversorgung (111; 111a, 111b) mit dem Motor verbunden ist.

5. Hilfsstromversorgungseinheit (1) nach einem der Ansprüche 1 bis 4, wobei
die Hilfsstromversorgungsvorrichtung (71; 202) ferner eine Schaltsteuerschaltung (203) umfasst, die zur Steuerung der Schaltschaltung (114; 114a, 114b) konfiguriert ist, und
wenn die externe Stromversorgung (45; 201a, 201b) normal ist und eine Bedingung für die Versorgung des Motors mit hoher Leistung erfüllt ist, die Schaltsteuerschaltung (203) die Schaltschaltung (114; 114a, 114b) so steuert, dass der Verbindungszustand der Hilfsstromversorgung (111; 111a, 111b) der Boost-Zustand wird.

6. Hilfsstromversorgungseinheit (1) nach Anspruch 5, wobei
der Motor eine Motoreinheit (13, 32) ist, die als Antriebsquelle für ein am Fahrzeug montiertes Lenksystem (2) dient, und
die Bedingung ist eine erste Bedingung ist, die beinhaltet,
dass eine Fahrzeuggeschwindigkeit gleich oder niedriger als ein Fahrtbestimmungsschwellenwert ist, und
dass eine Lenkgeschwindigkeit eines Lenkrads (3) gleich oder höher als ein Lenkausführungsbestimmungsschwellenwert ist.

7. Hilfsstromversorgungseinheit (1) nach Anspruch 5 oder 6, wobei
der Motor die Motoreinheit (13, 32) ist, die die Antriebsquelle für das am Fahrzeug montierte Lenksystem (2) ist, und
die Bedingung ist eine zweite Bedingung ist, die beinhaltet, dass die Lenkgeschwindigkeit des Lenkrads (3) gleich oder höher als ein Hochgeschwindigkeitslenkbestimmungsschwellenwert ist.

8. Verfahren zur Steuerung einer Hilfsstromversorgungseinheit (1), die einen Motor mit mehreren Stromversorgungssystemen von einer externen Stromversorgung (45) mit Strom versorgt, wobei
die Hilfsstromversorgungseinheit (1) umfasst:
eine Hilfsstromversorgungsvorrichtung (71), die sich an einer Zwischenposition in einem Stromversorgungspfad befindet, der den Motor mit Strom von der externen Stromversorgung (45) versorgt; und
eine Stromversorgungsleitungsgruppe (72), die einen Teil des Stromversorgungspfads bildet, wobei die Stromversorgungsleitungsgruppe (72) die Hilfsstromversorgungsvorrichtung (71) mit dem Motor verbindet,
die Hilfsstromversorgungsvorrichtung (71) umfasst:
eine Hilfsstromversorgung (111), die im Stromversorgungspfad vorgesehen ist, um die Stromversorgung des Motors von der externen Stromversorgung (45) zu unterstützen, und
eine Schaltschaltung (114), die so konfiguriert ist, dass sie den Verbindungszustand der Hilfsstromversorgung (111) mit dem Stromversorgungspfad umschaltet,
der Verbindungszustand der Hilfsstromversorgung (111) einen Boost-Zustand umfasst, in dem die Hilfsstromversorgung (111) in Reihe mit der externen Stromversorgung (45) zwischen der externen Stromversorgung (45) und dem Motor geschaltet ist,
die Stromversorgungsleitungsgruppe (72) mehrere einzelne Stromversorgungsleitungen (161, 162, 163, 164) umfasst, die mit den Stromversorgungssystemen verbunden sind.
die jeweiligen stromaufwärts gelegenen Enden der einzelnen Stromversorgungsleitungen (161, 162, 163, 164) an einer Position stromabwärts der Hilfsstromversorgung (111) mit dem Stromversorgungspfad verbunden sind,
die Hilfsstromversorgungsvorrichtung (71) ferner eine Verstärkungsschaltung (116) umfasst, die im Stromversorgungspfad so angeordnet ist, dass sie sich im Boost-Zustand stromabwärts der Hilfsstromversorgung (111) befindet,
jedes der stromaufwärts gelegenen Enden der einzelnen Stromversorgungsleitungen (161, 162, 163, 164) an einer Position stromabwärts der Verstärkungsschaltung (116) mit dem Stromversorgungspfad verbunden ist, und
ein Abschnitt des Stromversorgungspfads, der sich zwischen der Verstärkungsschaltung (116) und den stromauf gelegenen Enden befindet, nur über einen Draht zum Senden von Strom verfügt,
das Verfahren umfasst:
Bestimmen, ob die externe Stromversorgung (45) normal ist;
Bestimmen, ob eine Bedingung für die Versorgung des Motors mit hoher Leistung erfüllt ist; und
wenn eine Spannung von der externen Stromversorgung (45) normal ist und die Bedingung erfüllt ist, Steuern der Schaltschaltung (114) so, dass der Verbindungszustand der Hilfsstromversorgung (111) der Boost-Zustand wird.

9. Verfahren zur Steuerung einer Hilfsstromversorgungseinheit (1), die einen Motor mit mehreren Stromversorgungssystemen von einer externen Stromversorgung (201a, 201b) mit Strom versorgt, wobei
die Hilfsstromversorgungseinheit (1) umfasst:
eine Hilfsstromversorgungsvorrichtung (202), das sich an einer Zwischenposition in einem Stromversorgungspfad befindet, der den Motor mit Strom von der externen Stromversorgung (201a, 201b) versorgt; und
eine Stromversorgungsleitungsgruppe (212a, 212b), die einen Teil des Stromversorgungspfads bildet, wobei die Stromversorgungsleitungsgruppe (212a, 212b) die Hilfsstromversorgungsvorrichtung (202) mit dem Motor verbindet,
die Hilfsstromversorgungsvorrichtung (202) umfasst:
eine Hilfsstromversorgung (111a, 111b), die im Stromversorgungspfad vorgesehen ist, um die Stromversorgung des Motors von der externen Stromversorgung (201a, 201b) zu unterstützen, und
eine Schaltschaltung (114a, 114b), die so konfiguriert ist, dass sie den Verbindungszustand der Hilfsstromversorgung (111a, 111b) mit dem Stromversorgungspfad umschaltet,
der Verbindungszustand der Hilfsstromversorgung (111a, 111b) einen Boost-Zustand umfasst, in dem die Hilfsstromversorgung (111a, 111b) in Reihe mit der externen Stromversorgung (201a, 201b) zwischen der externen Stromversorgung (201a, 201b) und dem Motor geschaltet ist,
die Stromversorgungsleitungsgruppe (212a, 212b) mehrere einzelne Stromversorgungsleitungen (161, 162, 163, 164) umfasst, die mit den Stromversorgungssystemen verbunden sind,
die jeweiligen stromaufwärts gelegenen Enden der einzelnen Stromversorgungsleitungen (161, 162, 163, 164) an einer Position stromabwärts der Hilfsstromversorgung (111a, 111b) mit dem Stromversorgungspfad verbunden sind,
die externe Stromversorgung (201a, 201b) eine erste Stromversorgung (201a) und eine zweite Stromversorgung (201b) umfasst,
der Stromversorgungspfad einen ersten Stromversorgungspfad, der den Motor mit Strom von der ersten Stromversorgung versorgt, und einen zweiten Stromversorgungspfad, der den Motor mit Strom von der zweiten Stromversorgung versorgt, umfasst,
die Stromversorgungsleitungsgruppe (212a, 212b) umfasst:
eine erste Stromversorgungsleitungsgruppe (212a), die einen Teil des ersten Stromversorgungspfads bildet, wobei die erste Stromversorgungsleitungsgruppe (212a) die Hilfsstromversorgungsvorrichtung (202) mit dem Motor verbindet, und
eine zweite Stromversorgungsleitungsgruppe (212b), die einen Teil des zweiten Stromversorgungspfads bildet, wobei die zweite Stromversorgungsleitungsgruppe (212b) die Hilfsstromversorgungsvorrichtung (202) mit dem Motor verbindet,
die Hilfsstromversorgung (111a, 111b) umfasst:
eine erste Hilfsstromversorgung (111a), die im ersten Stromversorgungspfad vorgesehen ist, um die Stromversorgung des Motors von der ersten Stromversorgung zu unterstützen, und
eine zweite Hilfsstromversorgung (111b), die im zweiten Stromversorgungspfad vorgesehen ist, um die Stromversorgung des Motors von der zweiten Stromversorgung zu unterstützen.
die Schaltschaltung (114a, 114b) umfasst:
eine erste Schaltschaltung (114a), die so konfiguriert ist, dass sie einen Verbindungszustand der ersten Hilfsstromversorgung (111a) mit dem ersten Stromversorgungspfad umschaltet, und
eine zweite Schaltschaltung (114b), die so konfiguriert ist, dass sie den Verbindungszustand der zweiten Hilfsstromversorgung (111b) mit dem zweiten Stromversorgungspfad umschaltet,
die erste Stromversorgungsleitungsgruppe (212a) mehrere erste einzelne Stromversorgungsleitungen (161, 162) umfasst,
die zweite Stromversorgungsleitungsgruppe (212b) mehrere zweite einzelne Stromversorgungsleitungen (163, 164) umfasst,
jedes der stromaufwärts gelegenen Enden der ersten einzelnen Stromversorgungsleitungen (161, 162) an einer Position stromabwärts der ersten Hilfsstromversorgung (111a) mit dem ersten Stromversorgungspfad verbunden ist,
jedes der stromaufwärts gelegenen Enden der zweiten einzelnen Stromversorgungsleitungen (163, 164) an einer Position stromabwärts der zweiten Hilfsstromversorgung (111b) mit dem zweiten Stromversorgungspfad verbunden ist,
die Hilfsstromversorgungsvorrichtung (202) ferner umfasst:
eine erste Verstärkungsschaltung (116a), die im ersten Stromversorgungspfad so angeordnet ist, dass die sich im Boost-Zustand stromab von der ersten Hilfsstromversorgungsvorrichtung (111a) befindet,
eine zweite Verstärkungsschaltung (116b), die im zweiten Stromversorgungspfad so angeordnet ist, dass sie sich im Boost-Zustand stromab von der zweiten Hilfsstromversorgungsvorrichtung (111b) befindet, und
eine Verstärkungssteuerschaltung (203), die so konfiguriert ist, dass sie die erste Verstärkungsschaltung (116a) und die zweite Verstärkungsschaltung (116b) so steuert, dass eine von der ersten Verstärkungsschaltung (116a) ausgegebene Ausgangsspannung und eine von der zweiten Verstärkungsschaltung ausgegebene Ausgangsspannung (116b) gleich werden,
jedes der stromaufwärts gelegenen Enden der ersten einzelnen Stromversorgungsleitungen (161, 162) an einer Position stromabwärts der ersten Verstärkungsschaltung (116a) mit dem ersten Stromversorgungspfad verbunden ist, und
jedes der stromaufwärts gelegenen Enden der zweiten einzelnen Stromversorgungsleitungen (163, 164) an einer Position stromabwärts der zweiten Verstärkungsschaltung (116b) mit dem zweiten Stromversorgungspfad verbunden ist,
das Verfahren umfasst:
Bestimmen, ob die externe Stromversorgung (201a, 201b) normal ist;
Bestimmen, ob eine Bedingung für die Versorgung des Motors mit hoher Leistung erfüllt ist; und
wenn eine Spannung von der externen Stromversorgung (201a, 201b) normal ist und die Bedingung erfüllt ist, Steuern der Schaltschaltung (114a, 114b) so, dass der Verbindungszustand der Hilfsstromversorgung (111a, 111b) der Boost-Zustand wird.

10. Lenksystem (2) umfassend:
eine Motoreinheit (13, 32) mit mehreren Stromversorgungssystemen; und
die Hilfsstromversorgungseinheit (1) nach einem der Ansprüche 1 bis 7, die die Motoreinheit (13, 32) mit Strom von der externen Stromversorgung (45; 201a, 201b) versorgt.

## Revendications

1. Groupe d'alimentation auxiliaire (1) qui fournit de l'énergie à partir d'une alimentation externe (45) à un moteur incluant une pluralité de systèmes d'alimentation, le groupe d'alimentation auxiliaire (1) comprenant :
un dispositif d'alimentation auxiliaire (71) situé à une position intermédiaire sur un chemin d'alimentation qui fournit de l'énergie de l'alimentation externe (45) au moteur ; et
un groupe de lignes d'alimentation (72) faisant partie du chemin d'alimentation, le groupe de lignes d'alimentation (72) reliant le dispositif d'alimentation auxiliaire (71) au moteur, dans lequel
le dispositif d'alimentation auxiliaire (71) inclut
une alimentation auxiliaire (111) prévue sur le chemin d'alimentation pour assister l'alimentation du moteur depuis l'alimentation externe (45), et
un circuit de commutation (114) configuré pour commuter un état de connexion de l'alimentation auxiliaire (111) vers le chemin d'alimentation,
l'état de connexion de l'alimentation auxiliaire (111) inclut un état boost dans lequel l'alimentation auxiliaire (111) est connectée en série avec l'alimentation externe (45) entre l'alimentation externe (45) et le moteur,
le groupe de lignes d'alimentation (72) inclut une pluralité de lignes d'alimentation individuelles (161, 162, 163, 164) connectées à la pluralité de systèmes d'alimentation,
chacune des extrémités amont de la pluralité de lignes d'alimentation individuelles (161, 162, 163, 164) est connectée au chemin d'alimentation à une position en aval de l'alimentation auxiliaire (111),
le dispositif d'alimentation auxiliaire (71) inclut en outre un circuit élévateur (116) disposé sur le chemin d'alimentation de manière à être situé en aval de l'alimentation auxiliaire (111) lorsqu'il est en état boost,
chacune des extrémités amont de la pluralité de lignes d'alimentation individuelles (161, 162, 163, 164) est connectée au chemin d'alimentation à une position en aval du circuit élévateur (116), et
une partie du chemin d'alimentation qui est située entre le circuit élévateur (116) et les extrémités en amont ne présente qu'un fil pour transmettre l'alimentation.

2. Groupe d'alimentation auxiliaire (1) qui fournit de l'énergie à partir d'une alimentation externe (201a, 201b) à un moteur incluant plusieurs systèmes d'alimentation, le groupe d'alimentation auxiliaire (1) comprenant :
un dispositif d'alimentation auxiliaire (202) situé à une position intermédiaire sur un chemin d'alimentation qui fournit de l'énergie de l'alimentation externe (201a, 201b) au moteur; et
un groupe de lignes d'alimentation (212a, 212b) faisant partie du chemin d'alimentation, le groupe de lignes d'alimentation (212a, 212b) reliant le dispositif d'alimentation auxiliaire (202) au moteur, dans lequel
le dispositif d'alimentation auxiliaire (202) inclut
une alimentation auxiliaire (111a, 111b) prévue sur le chemin d'alimentation pour assister l'alimentation du moteur à partir de l'alimentation externe (201a, 201b), et
un circuit de commutation (114a, 114b) configuré pour commuter un état de connexion de l'alimentation auxiliaire (111a, 111b) vers le chemin d'alimentation,
l'état de connexion de l'alimentation auxiliaire (111a, 111b) inclut un état boost dans lequel l'alimentation auxiliaire (111a, 111b) est connectée en série avec l'alimentation externe (201a, 201b) entre l'alimentation externe (201a, 201b) et le moteur,
le groupe de lignes d'alimentation (212a, 212b) inclut une pluralité de lignes d'alimentation individuelles (161, 162, 163, 164) connectées à la pluralité de systèmes d'alimentation,
chacune des extrémités amont de la pluralité de lignes d'alimentation individuelles (161, 162, 163, 164) est connectée au chemin d'alimentation à une position en aval de l'alimentation auxiliaire (111a, 111b),
l'alimentation externe (201a, 201b) inclut une première alimentation (201a) et une seconde alimentation (201b), le chemin d'alimentation inclut un premier chemin d'alimentation qui fournit l'énergie de la première alimentation au moteur, et un second chemin d'alimentation qui fournit l'énergie de la seconde alimentation au moteur.
le groupe de lignes d'alimentation (212a, 212b) inclut
un premier groupe de lignes d'alimentation (212a) faisant partie du premier chemin d'alimentation, le premier groupe de lignes d'alimentation (212a) reliant le dispositif d'alimentation auxiliaire (202) au moteur, et
un second groupe de lignes d'alimentation (212b) faisant partie du second chemin d'alimentation, le second groupe de lignes d'alimentation (212b) reliant le dispositif d'alimentation auxiliaire (202) au moteur,
l'alimentation auxiliaire (111a, 111b) inclut
une première alimentation auxiliaire (111a) prévue sur le premier chemin d'alimentation pour assister l'alimentation du moteur depuis la première alimentation, et
une seconde alimentation auxiliaire (111b) prévue sur le second chemin d'alimentation pour assister l'alimentation du moteur depuis la seconde alimentation, le circuit de commutation (114a, 114b) incluant
un premier circuit de commutation (114a) configuré pour commuter l'état de connexion de la première alimentation auxiliaire (111a) vers le premier chemin d'alimentation, et
un second circuit de commutation (114b) configuré pour commuter un état de connexion de la seconde alimentation auxiliaire (111b) vers le second chemin d'alimentation,
le premier groupe de lignes d'alimentation (212a) inclut une pluralité de premières lignes d'alimentation individuelles (161, 162),
le second groupe de lignes d'alimentation (212b) inclut une pluralité de secondes lignes d'alimentation individuelles (163, 164),
chacune des extrémités amont de la pluralité des premières lignes d'alimentation individuelles (161, 162) est connectée au premier chemin d'alimentation à une position en aval de la première alimentation auxiliaire (111a),
chacune des extrémités amont de la pluralité de secondes lignes d'alimentation individuelles (163, 164) est connectée au second chemin d'alimentation à une position en aval de la seconde alimentation auxiliaire (111b),
le dispositif d'alimentation auxiliaire (202) inclut en outre
un premier circuit élévateur (116a) prévu sur le premier chemin d'alimentation de manière à être situé en aval de la première alimentation auxiliaire (111a) lorsqu'il est en état boost,
un second circuit élévateur (116b) prévu sur le second chemin d'alimentation de manière à être situé en aval de la seconde alimentation auxiliaire (111b) en état boost, et
un circuit de commande élévateur (203) configuré pour commander le premier circuit élévateur (116a) et le second circuit élévateur (116b) de manière à ce que la tension de sortie du premier circuit élévateur (116a) et la tension de sortie du second circuit élévateur (116b) deviennent égales l'une à l'autre,
chacune des extrémités amont de la pluralité des premières lignes d'alimentation individuelles (161, 162) est connectée au premier chemin d'alimentation à une position en aval du premier circuit élévateur (116a), et
chacune des extrémités amont de la pluralité de secondes lignes d'alimentation individuelles (163, 164) est connectée au second chemin d'alimentation à une position en aval du second circuit élévateur (116b).

3. Unité d'alimentation auxiliaire (1) selon la revendication 1 ou 2, dans laquelle l'état de connexion de l'alimentation auxiliaire (111 ; 111a, 111b) inclut en outre un état de charge dans lequel l'alimentation auxiliaire (111 ; 111a, 111b) est connectée en parallèle avec le moteur à l'alimentation externe (45 ; 201a, 201b).

4. Unité d'alimentation auxiliaire (1) selon l'une quelconque des revendications 1 à 3, dans laquelle l'état de connexion de l'alimentation auxiliaire (111 ; 111a, 111b) inclut en outre un état de secours dans lequel l'alimentation auxiliaire (111 ; 111a, 111b) est déconnectée de l'alimentation externe (45 ; 201a, 201b) et l'alimentation auxiliaire (111 ; 111a, 111b) est connectée au moteur.

5. Unité d'alimentation auxiliaire (1) selon l'une quelconque des revendications 1 à 4, dans laquelle
le dispositif d'alimentation auxiliaire (71 ; 202) inclut en outre un circuit de commande de commutation (203) configuré pour commander le circuit de commutation (114 ; 114a, 114b), et
lorsque l'alimentation externe (45 ; 201a, 201b) est normale et qu'une condition pour fournir une grande puissance au moteur est satisfaite, le circuit de commande de commutation (203) commande le circuit de commutation (114; 114a, 114b) de telle sorte que l'état de connexion de l'alimentation auxiliaire (111 ; 111a, 111b) devienne l'état boost.

6. Unité d'alimentation auxiliaire (1) selon la revendication 5, dans laquelle
le moteur est un groupe motopropulseur (13, 32) qui constitue une source d'entraînement pour un système de direction (2) monté sur un véhicule, et
la condition est une première condition, incluant,
que la vitesse d'un véhicule est égale ou inférieure à un seuil de détermination de la vitesse, et
qu'une vitesse de direction d'un volant (3) est égale ou supérieure à un seuil de détermination d'exécution de direction.

7. Unité d'alimentation auxiliaire (1) selon la revendication 5 ou 6, dans laquelle
le moteur est le groupe motopropulseur (13, 32) qui constitue la source d'entraînement du système de direction (2) monté sur le véhicule, et
la condition est une seconde condition incluant que la vitesse de direction du volant (3) est égale ou supérieure à un seuil de détermination de direction à haute vitesse.

8. Procédé de commande d'une unité d'alimentation auxiliaire (1) qui fournit de l'énergie à partir d'une alimentation externe (45) à un moteur incluant une pluralité de systèmes d'alimentation,
l'unité d'alimentation auxiliaire (1) incluant
un dispositif d'alimentation auxiliaire (71) situé à une position intermédiaire sur un chemin d'alimentation qui fournit de l'énergie de l'alimentation externe (45) au moteur, et
un groupe de lignes d'alimentation (72) faisant partie du chemin d'alimentation, le groupe de lignes d'alimentation (72) reliant le dispositif d'alimentation auxiliaire (71) au moteur,
le dispositif d'alimentation auxiliaire (71) incluant
une alimentation auxiliaire (111) prévue sur le chemin d'alimentation pour assister l'alimentation du moteur depuis l'alimentation externe (45), et
un circuit de commutation (114) configuré pour commuter un état de connexion de l'alimentation auxiliaire (111) vers le chemin d'alimentation,
l'état de connexion de l'alimentation auxiliaire (111), incluant un état boost dans lequel l'alimentation auxiliaire (111) est connectée en série avec l'alimentation externe (45) entre l'alimentation externe (45) et le moteur,
le groupe de lignes d'alimentation (72) incluant une pluralité de lignes d'alimentation individuelles (161, 162, 163, 164) connectées à la pluralité de systèmes d'alimentation,
chacune des extrémités amont de la pluralité de lignes d'alimentation individuelles (161, 162, 163, 164) étant connectée au chemin d'alimentation à une position en aval de l'alimentation auxiliaire (111),
le dispositif d'alimentation auxiliaire (71) incluant en outre un circuit élévateur (116) disposé sur le chemin d'alimentation de manière à être situé en aval de l'alimentation auxiliaire (111),
chacune des extrémités amont de la pluralité de lignes d'alimentation individuelles (161, 162, 163, 164) étant connectée au chemin d'alimentation à une position en aval du circuit élévateur (116), et
une partie du chemin d'alimentation qui se trouve entre le circuit élévateur (116) et les extrémités en amont ne présentant qu'un fil pour transmettre l'alimentation,
le procédé comprenant :
la détermination du fait de savoir si l'alimentation externe (45) est normale ;
la détermination du fait de savoir si une condition permettant de fournir une puissance élevée au moteur est satisfaite ; et
lorsque la tension de l'alimentation externe (45) est normale et que la condition est satisfaite, la commande du circuit de commutation (114) de manière à ce que l'état de connexion de l'alimentation auxiliaire (111) devienne l'état boost.

9. Procédé de commande d'une unité d'alimentation auxiliaire (1) qui fournit de l'énergie à partir d'une alimentation externe (201a, 201b) à un moteur incluant une pluralité de systèmes d'alimentation,
l'unité d'alimentation auxiliaire (1) incluant
un dispositif d'alimentation auxiliaire (202) situé à une position intermédiaire sur un chemin d'alimentation qui fournit de l'énergie de l'alimentation externe (201a, 201b) au moteur, et
un groupe de lignes d'alimentation (212a, 212b) faisant partie du chemin d'alimentation, le groupe de lignes d'alimentation (212a, 212b) reliant le dispositif d'alimentation auxiliaire (202) au moteur,
le dispositif d'alimentation auxiliaire (202) incluant
une alimentation auxiliaire (111a, 111b) prévue sur le chemin d'alimentation pour assister l'alimentation du moteur à partir de l'alimentation externe (201a, 201b), et
un circuit de commutation (114a, 114b) configuré pour commuter un état de connexion de l'alimentation auxiliaire (111a, 111b) vers le chemin d'alimentation,
l'état de connexion de l'alimentation auxiliaire (111a, 111b) incluant un état boost dans lequel l'alimentation auxiliaire (111a, 111b) est connectée en série avec l'alimentation externe (201a, 201b) entre l'alimentation externe (201a, 201b) et le moteur,
le groupe de lignes d'alimentation (212a, 212b) incluant une pluralité de lignes d'alimentation individuelles (161, 162, 163, 164) connectées à la pluralité de systèmes d'alimentation,
chacune des extrémités amont de la pluralité de lignes d'alimentation individuelles (161, 162, 163, 164) étant connectée au chemin d'alimentation à une position en aval de l'alimentation auxiliaire (111a, 111b),
l'alimentation externe (201a, 201b) incluant une première alimentation (201a) et une seconde alimentation (201b),
le chemin d'alimentation incluant un premier chemin d'alimentation qui alimente le moteur à partir de la première source d'alimentation, et un second chemin d'alimentation qui alimente le moteur à partir de la seconde source d'alimentation.
le groupe de lignes d'alimentation (212a, 212b) incluant
un premier groupe de lignes d'alimentation (212a) faisant partie du premier chemin d'alimentation, le premier groupe de lignes d'alimentation (212a) reliant le dispositif d'alimentation auxiliaire (202) au moteur, et
un second groupe de lignes d'alimentation (212b) faisant partie du second chemin d'alimentation, le second groupe de lignes d'alimentation (212b) reliant le dispositif d'alimentation auxiliaire (202) au moteur,
l'alimentation auxiliaire (111a, 111b) incluant
une première alimentation auxiliaire (111a) prévue sur le premier chemin d'alimentation pour assister l'alimentation du moteur depuis la première alimentation, et
une seconde alimentation auxiliaire (111b) prévue sur le second chemin d'alimentation pour assister l'alimentation du moteur depuis la seconde alimentation, le circuit de commutation (114a, 114b) incluant
un premier chemin de commutation (114a) configuré pour commuter l'état de connexion de la première alimentation auxiliaire (111a) vers le premier chemin d'alimentation, et
un second circuit de commutation (114b) configuré pour commuter un état de connexion de la seconde alimentation auxiliaire (111b) vers le second chemin d'alimentation,
le premier groupe de lignes d'alimentation (212a) incluant une pluralité de premières lignes d'alimentation individuelles (161, 162),
le second groupe de lignes d'alimentation (212b) incluant une pluralité de secondes lignes d'alimentation individuelles (163, 164),
chacune des extrémités amont de la pluralité des premières lignes d'alimentation individuelles (161, 162) étant connectée au premier chemin d'alimentation à une position en aval de la première alimentation auxiliaire (111a),
chacune des extrémités amont de la pluralité de secondes lignes d'alimentation individuelles (163, 164) étant connectée au second chemin d'alimentation à une position en aval de la seconde alimentation auxiliaire (111b),
le dispositif d'alimentation auxiliaire (202) incluant en outre
un premier circuit élévateur (116a) prévu sur le premier chemin d'alimentation de manière à être situé en aval de la première alimentation auxiliaire (111a) lorsqu'il est en état boost,
un second circuit élévateur (116b) prévu sur le second chemin d'alimentation de manière à être situé en aval de la seconde alimentation auxiliaire (111b) en état boost, et
un circuit de commande élévateur (203) configuré pour commander le premier circuit élévateur (116a) et le second circuit élévateur (116b) de manière à ce que la tension de sortie du premier circuit élévateur (116a) et la tension de sortie du second circuit élévateur (116b) deviennent égales l'une à l'autre,
chacune des extrémités amont de la pluralité des premières lignes d'alimentation individuelles (161, 162) étant connectée au premier chemin d'alimentation à une position en aval du premier circuit élévateur (116a), et
chacune des extrémités amont de la pluralité de secondes lignes d'alimentation individuelles (163, 164) étant connectée au second chemin d'alimentation à une position en aval du second circuit élévateur (116b),
le procédé comprenant :
la détermination du fait de savoir si l'alimentation externe (201a, 201b) est normale ;
la détermination du fait de savoir si une condition permettant de fournir une puissance élevée au moteur est satisfaite ; et
lorsque la tension de l'alimentation externe (201a, 201b) est normale et que la condition est satisfaite, la commande du circuit de commutation (114a, 114b) de telle sorte que l'état de connexion de l'alimentation auxiliaire (111a, 111b) devienne l'état boost.

10. Système de direction (2) comprenant :
un groupe motopropulseur (13, 32) incluant plusieurs systèmes d'alimentation ; et
l'unité d'alimentation auxiliaire (1) selon l'une quelconque des revendications 1 à 7 qui fournit de l'énergie à partir de l'alimentation externe (45 ; 201a, 201b) à l'unité moteur (13, 32).
